# EUROPÄISCHE PATENTSCHRIFT

(11) **EP 2 597 931 B1**
(45) Veröffentlichungstag und Bekanntmachung des Hinweises auf die Patenterteilung: **27.05.2015**
(21) Anmeldenummer: 11007116.4
(22) Anmeldetag: 01.09.2011
(51) Int. Cl.: H05B 33/08, G05F 3/26, H03K 5/22

(54) **Treiberschaltung und zugehörige Fehlererkennungsschaltung und Verfahren hierfür**
Driver circuit and corresponding error recognition circuit and method for same
Circuit d'excitation, circuit de détection d'erreurs associé et procédé correspondant

(43) Veröffentlichungstag der Anmeldung: 29.05.2013
(73) Patentinhaber: Silicon Touch Technology, Inc., Hsin-Chu (TW)
(72) Erfinder: Chuang, Yu-Chun, Hsinchu-City, R.O.C. (TW); Pu, Ruei-Iun, Hsinchu-City, R.O.C. (TW)
(74) Vertreter: Görz, Ingo

(56) Entgegenhaltungen:
- US-A1- 2006 028 150
- US-A1- 2006 055 465
- US-A1- 2007 205 823
- US-A1- 2008 042 729
- US-A1- 2010 102 731
- US-B1- 6 194 967

## Beschreibung

Die vorliegende Erfindung betrifft allgemein eine Treiberschaltung, und genauer eine Treiberschaltung mit niedriger Ausgangsspannung zum Ansteuern einer Lichtausgabevorrichtung und eine dazugehörige Fehlererkennungsschaltung.

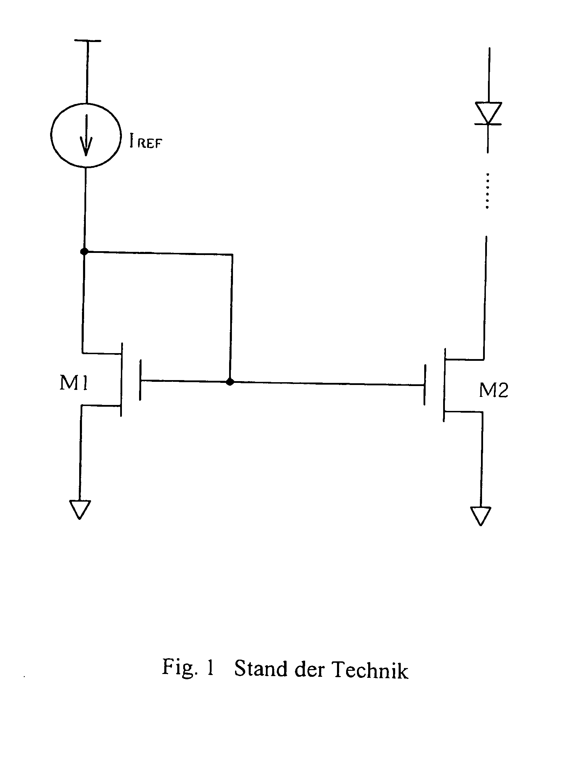

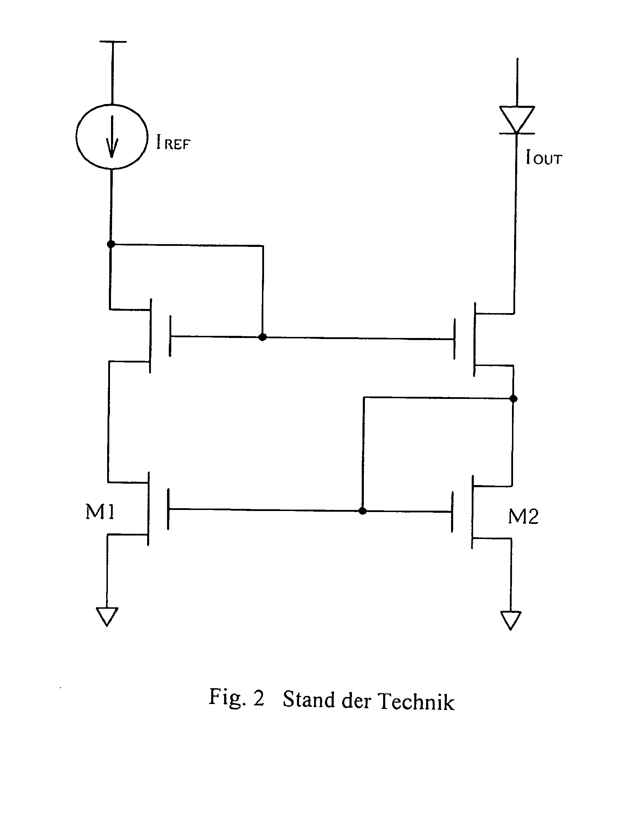

Ein herkömmlicher Konstantstromtreiber, wie er in Fig. 1 gezeigt ist, wird allgemein genutzt, um einen Treiberstrom zum Ansteuern einer Lastvorrichtung zu erzeugen. Der Stromtreiber, insbesondere ein LED-Treiber (LED - Leuchtdiode), benötigt normalerweise eine hohe Ausgangsimpedanz. Eine hohe Ausgangsimpedanz kann entweder durch Verringern der Wirkung aufgrund der Kanallängenmodulation (Vergrößern der Länge des Treiber-MOSFETs) oder durch Kaskodierung des Treibers (in Fig. 2 gezeigt) erhalten werden. Ersteres sucht einen Ausgleich zwischen der Stromgenauigkeit und dem Schaltungsbereich und ist somit keine wirksame Art und Weise, eine hohe Ausgangsimpedanz zu erhalten, da sich die hohe Genauigkeit mit der Anstiegsrate ausgleicht. Letztere nutzt eine negative Rückkopplungsschleife, um die Ausgangsimpedanz um einen Faktor von ca. 2+gm*ro zu erhöhen. Im Falle der negativen Rückkopplungsschleife wird die Ausgangsimpedanz durch die Verstärkerschleife erhöht, so dass Vorrichtungen (MOSFETs) mit einer kürzeren Kanallänge verwendet werden können. Jedoch wird diese Art von Schaltungsanordnung nicht zufriedenstellend funktionieren, wenn die Ausgangsspannung des Stromtreibers ziemlich niedrig ist. Weiterhin ist eine Stromspiegel-Schaltungsanordnung mit einer aktiven Rückkopplung im US-Patent Nr. 6,194,967 von Johnson u.a. offenbart. Wie offenbart, wird ein Operationsverstärker in der Stromspiegel-Schaltungsanordnung verwendet, so dass die entsprechenden Spannungen an den Anschlüssen der offenbarten Stromspiegel-Schaltungsanordnung im Wesentlichen gleich sind. Jedoch besteht die Ausgangsstufe der offenbarten Stromspiegel-Schaltungsanordnung aus zwei in Kaskodenschaltung angeordneten Transistoren, und somit müssen diese zwei in Kaskodenschaltung angeordneten Transistoren im Triodenbereich betrieben werden. Aufgrund des linearen Verhältnisses zwischen der Spannung und dem Strom bei Betrieb im Triodenbereich, können die in Kaskodenschaltung angeordneten Transistoren den Ausgangsstrom nicht mit hoher Genauigkeit bereitstellen. Das heißt, auch wenn die Spannungen am Anschluss in dieser Stromspiegel-Schaltungsanordnung gut gesteuert bzw. geregelt sind, ist es jedoch nicht möglich, für eine Last einen Treiberstrom mit hoher Genauigkeit bereitzustellen. Außerdem erhöhen die zwei in Kaskodenschaltung angeordneten Transistoren den Ausgangsspannungspegel, was zu einer Erhöhung des Stromverbrauchs führt. Überdies führt ein großer Treiberbereich zu eine Laden einer großen parasitären Kapazität, wodurch die Anstiegsrate verringert wird.

US2007/0205823A1 offenbart eine LED-Treiberschaltung, die einen Operationsverstärker mit einer aktiven Rückkopplungsschleife umfasst.

US2008/0042729A1 offenbart ein Verfahren zum Betrieb einer Ladungspumpe, wobei die Ladungspumpe mit einem Stromspiegel verbunden ist.

US2006/0028150A1 offenbart eine Treiberschaltung für parallel-geschaltete LEDs. Diese umfasst mehrere parallel-geschaltete Stromspiegel zur Versorgung der LEDs.

US2010/0102731A1 offenbart einen Stromregler für eine LED-Anzeige. Durch diesen wird der Versorgungsstrom der LEDs über einen oder über zwei geregelte Stromquellen bereitgestellt. Die Stromquellen können dabei Stromspiegel sein.

US2006/0055465A1 offenbart einen Stromspiegel mit einer Rückkopplungseinheit.

Somit gibt es noch einige Schwächen in der herkömmlichen Konstruktion des Stromtreibers, die verbessert werden müssen.

Diese Aufgabe wird erfindungsgemäß durch die Merkmale des Anspruchs 1 gelöst. Die jeweiligen Unteransprüche betreffen Weiterbildungen der Erfindung.

Im Hinblick darauf bietet die vorliegende Erfindung eine Treiberschaltung mit niedriger Ausgangsspannung. Genauer gesagt nutzt die vorliegende Erfindung nicht nur ein aktives Bauteil (z. B. einen Verstärker) in einer Rückkopplungsschleife der erfindungsgemäßen Treiberschaltung, sondern hält auch die Ausgangsspannung auf gleichem Pegel. Das aktive Bauteil kann die Genauigkeit des Treiberstroms erhöhen, indem die entsprechende Spannung jedes Knotens/Endes (Anschlusses) der Transistoren der Treiberschaltung (z. B. Stromspiegel) gleichbleibend aufrechterhalten wird. Somit kann der Referenzstrom, der in den Stromspiegel eingegeben wird, genau gespiegelt werden, um den Treiberstrom zu erzeugen. Weiterhin hält die erfindungsgemäße Schaltung auch den Ausgangsspannungspegel innerhalb eines ziemlich niedrigen Bereichs, so dass der Stromverbrauch der Treiberschaltung gut zu steuern ist. Außerdem integriert die vorliegende Erfindung eine Offsetlöschungsschaltung und/oder eine Pegelumsetzschaltung in die Treiberschaltung, um die Leistung des Verstärkers zu erhöhen. Dadurch erzeugt die vorliegende Erfindung den Treiberstrom mit der höchsten Genauigkeit.

Die vorliegende Erfindung offenbart weiterhin eine Fehlererkennungsschaltung zum Überwachen der Funktionsfähigkeit der Treiberschaltung, was durch eine Erfassung einer Ausgangsspannung der Treiberschaltung erreicht wird.

Gemäß einem Ausführungsbeispiel der vorliegenden Erfindung umfasst eine erfindungsgemäße Treiberschaltung zum Ansteuern einer Licht ausstrahlenden

Vorrichtung einen Stromspiegel und einen Verstärker. Der Stromspiegel umfasst einen ersten Transistor und einen zweiten Transistor, von denen jeder ein erstes Ende, ein zweites Ende und ein Steuerende aufweist, wobei der erste Transistor ausgelegt ist, einen Referenzstrom am ersten Ende des ersten Transistors zu empfangen, und der zweite Transistor ausgelegt ist, einen Treiberstrom am ersten Ende des zweiten Transistors zu erzeugen. Zusätzlich ist das erste Ende des zweiten Transistors direkt mit der Licht ausstrahlenden Vorrichtung verbunden. Der Verstärker umfasst einen ersten Eingangsanschluss, einen zweiten Eingangsanschluss und einen Ausgangsanschluss. Der erste Eingangsanschluss ist mit dem ersten Ende des ersten Transistors verbunden, während der zweite Eingangsanschluss mit dem ersten Ende des zweiten Transistors verbunden ist. Der Ausgangsanschluss ist mit den Steuerenden des ersten und des zweiten Transistors verbunden.

Gemäß einem weiteren Ausführungsbeispiel der vorliegenden Erfindung umfasst eine Fehlererkennungsschaltung für eine Treiberschaltung eine Referenzspannungs-Erzeugungsschaltung und einen Komparator. Dabei umfasst die Treiberschaltung zumindest einen ersten Transistor, und ein erstes Ende des ersten Transistors gibt einen Treiberstrom aus. Die Referenzspannungs-Erzeugungsschaltung umfasst einen zweiten Transistor und eine Referenzstromquelle. Der zweite Transistor weist ein erstes Ende, ein zweites Ende und ein Steuerende auf. Das Steuerende des zweiten Transistors ist mit einer Versorgungsspannung (z. B. V_{DD} der Stromzufuhr) der Treiberschaltung verbunden. Die Referenzstromquelle ist mit dem ersten Ende des zweiten Transistors verbunden und ausgelegt, einen Referenzstrom für den zweiten Transistor bereitzustellen. Der Komparator weist einen ersten Eingangsanschluss, einen zweiten Eingangsanschluss und einen Ausgangsanschluss auf. Der erste Eingangsanschluss ist mit dem ersten Ende des ersten Transistors verbunden, während der zweite Eingangsanschluss mit dem ersten Ende des zweiten Transistors verbunden ist. Der Komparator ist ausgelegt, einen Spannungspegel des ersten Endes des ersten Transistors mit einem Spannungspegel des ersten Endes des zweiten Transistors zu vergleichen, um ein Signal, das einen Fehler anzeigt, am Ausgangsanschluss zu erzeugen.

Gemäß noch einem weiteren Ausführungsbeispiel der vorliegenden Erfindung wird ein Fehlererkennungsverfahren bereitgestellt. Das Fehlererkennungsverfahren wird genutzt, um einen Fehlerstatus einer Treiberschaltung mit zumindest einem ersten Transistor zu erfassen. Ein erstes Ende des ersten Transistors gibt einen Treiberstrom aus. Das Fehlererkennungsverfahren umfasst: Erzeugen einer Referenzspannung durch Anlegen einer Versorgungsspannung an ein Gate eines zweiten Transistors und Anlegen eines Referenzstroms an ein erstes Ende des zweiten Transistors; und Erzeugen eines Signals, das einen Fehler anzeigt, durch Vergleichen eines Spannungspegels des ersten Endes des ersten Transistors mit einem Spannungspegel des ersten Endes des zweiten Transistors.

Diese und andere Ziele der vorliegenden Erfindung werden ohne Zweifel für die Fachleute auf dem Gebiet beim Lesen der nachfolgenden genauen Beschreibung des bevorzugten Ausführungsbeispiels, das in den verschiedenen Figuren gezeigt ist, verständlich werden. In der Zeichnung zeigt:
- Fig. 1: ein Schaltkreisdiagramm eines Stromtreibers des Standes der Technik;
- Fig. 2: ein Schaltkreisdiagramm eines in Kaskodenschaltung angeordneten Stromtreibers des Standes der Technik;
- Fig. 3: ein Schaltkreisdiagramm einer Treiberschaltung gemäß einem Ausführungsbeispiel der vorliegenden Erfindung;
- Fig. 4: ein Konzept-Schaltkreisdiagramm einer Treiberschaltung mit einer Offsetlöschungsschaltung gemäß einem Ausführungsbeispiel der vorliegenden Erfindung;
- Fig. 5: ein detailliertes Schaltkreisdiagramm der in Fig. 4 gezeigten Treiberschaltung;
- Fig. 6: ein Konzept-Schaltkreisdiagramm einer erfindungsgemäßen Treiberschaltung mit einer Offsetlöschungsschaltung und einer Pegelumsetzschaltung gemäß einem Ausführungsbeispiel der vorliegenden Erfindung;
- Fig.7: ein Konzept-Schaltkreisdiagramm einer erfindungsgemäßen Treiberschaltung mit einer Pegelumsetzschaltung gemäß einem Ausführungsbeispiel der vorliegenden Erfindung;
- Fig. 8A - 8C: eine detaillierte Schaltkreisdarstellung der erfindungsgemäßen Treiberschaltung mit einer Offsetlöschungs- und Pegelumsetzschaltung und entsprechenden Phasen gemäß einem Ausführungsbeispiel der vorliegenden Erfindung;
- Fig. 9A - 9C: eine detaillierte Schaltkreisdarstellung der erfindungsgemäßen Treiberschaltung mit einer Offsetlöschungs- und Pegelumsetzschaltung und entsprechenden Phasen gemäß einem weiteren Ausführungsbeispiel der vorliegenden Erfindung;
- Fig. 10: ein Schaltkreisdiagramm, das die erfindungsgemäße Treiberschaltung zeigt, die einen Zero-Nulling-Widerstand (Nulllöschungswiderstand) gemäß einem Ausführungsbeispiel der vorliegenden Erfindung verwendet; und
- Fig. 11: ein Schaltkreisdiagramm einer Fehlererkennungsschaltung gemäß einem Ausführungsbeispiel der vorliegenden Erfindung.

Nachfolgend wird die vorliegende Erfindung unter Bezugnahme auf verschiedene Ausführungsbeispiele beschrieben. Es ist selbstverständlich, dass verschiedene Modifikationen und Veränderungen vorgenommen werden können, ohne vom breiteren Umfang der Erfindung abzuweichen. Weiterhin dienen die nachfolgenden Beschreibungen der verschiedenen Ausführungsbeispiele der vorliegenden Erfindung anhand der beiliegenden Zeichnungen nur zum Zwecke der Erläuterung und sollten nicht als eine Einschränkung des Umfangs der vorliegenden Erfindung betrachtet werden. Weiterhin werden ähnliche Bauteile und Elemente in den beigefügten Zeichnungen mit den gleichen Bezugszeichen bezeichnet und können ähnliche Funktionen und Wirkungen haben.

Bestimmte Begriffe werden in der nachfolgenden Beschreibung und den Ansprüchen durchgängig verwendet, um bestimmte Systemkomponenten zu bezeichnen. Wie Fachleute auf dem Gebiet anerkennen werden, können Hersteller eine Komponente mit verschiedenen Bezeichnungen benennen. Dieses Dokument beabsichtigt nicht, zwischen Komponenten zu unterscheiden, die sich im Namen aber nicht in der Funktion unterscheiden. In der nachfolgenden Beschreibung und in den Ansprüchen werden die Begriffe "beinhalten" und "umfassen" in einer offenen Weise verwendet, und sollten dahingehend interpretiert werden, dass sie "einschließlich, aber nicht beschränkt auf ..." bedeuten. Auch sollen die Begriffe "koppeln" bzw. "verbinden" entweder eine indirekte oder direkte elektrische Verbindung bedeuten. Dementsprechend kann, wenn eine Vorrichtung mit einer anderen Vorrichtung gekoppelt ist, diese Verbindung über eine direkte elektrische Verbindung oder über eine indirekte elektrische Verbindung über andere Vorrichtungen und Verbindungen bestehen.

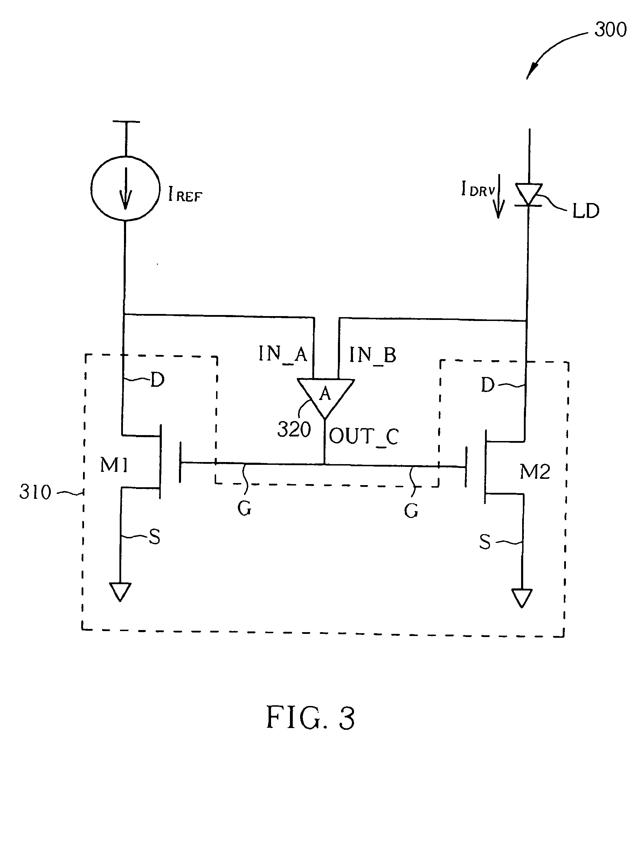

Es sei auf Fig. 3 Bezug genommen, die ein Schaltkreisdiagramm einer Treiberschaltung zum Ansteuern einer Licht ausstrahlenden Vorrichtung gemäß einem Ausführungsbeispiel der vorliegenden Erfindung zeigt. Wie in Fig. 3 gezeigt, umfasst eine Treiberschaltung 300 einen Stromspiegel 310 und einen Verstärker 320 zum Zwecke des Ansteuerns einer Licht ausstrahlenden Vorrichtung LD. Die erfindungsgemäße Treiberschaltung 300 nutzt den Stromspiegel 310 hauptsächlich dazu, einen Referenzstrom I_{REF}, der vermutlich von einer Konstantstromquelle erzeugt wird, zu spiegeln, um einen Treiberstrom I_{DRV} zu erzeugen. Mit der Hilfe des Verstärkers 320 wird der Treiberstrom I_{DRV} mit höherer Genauigkeit erzeugt.

Wie in Fig. 3 gezeigt, weist der Stromspiegel 300 einen ersten Transistor M1 und einen zweiten Transistor M2 auf, von denen jeder ein erstes Ende D, ein zweites Ende S und ein Steuerende G aufweist. Der erste Transistor M1 ist ausgelegt, den Referenzstrom I_{REF}, der am ersten Ende D des ersten Transistors M1 eingegeben wird, zu empfangen, während der zweite Transistor ausgelegt ist, den Treiberstrom I_{DRV}, der am ersten Ende D des zweiten Transistors M2 ausgegeben wird, zu erzeugen. Zusätzlich ist das erste Ende D des zweiten Transistors M2 direkt mit der Licht ausstrahlenden Vorrichtung LD verbunden. Der Verstärker 320 hält die entsprechenden Spannungen der Enden der Transistoren M1 und M2 gleichbleibend aufrecht und umfasst einen ersten Eingangsanschluss IN_A, einen zweiten Eingangsanschluss IN_B und einen Ausgangsanschluss OUT_C. Der erste Eingangsanschluss IN_A ist mit dem ersten Ende D des ersten Transistors M2 verbunden, während der zweite Eingangsanschluss IN_B mit dem ersten Ende D des zweiten Transistors M2 verbunden ist. Weiterhin ist der Ausgangsanschluss OUT_C mit den Steuerenden G des ersten Transistors M1 und des zweiten Transistors M2 verbunden. Aufgrund der virtuell verkürzten Kennlinie des Verstärkers 320 sind die Spannungspegel der ersten Enden D des ersten Transistors M1 und des zweiten Transistors M2 im Wesentlichen gleich. Somit wird der Referenzstrom I_{REF} in diesem Ausführungsbeispiel genau gespiegelt und der Treiberstrom I_{DRV} wird gemäß den Längenverhältnissen/Formfaktoren der Transistoren M1 und M2 erzeugt. Aufgrund des einfachen Aufbaus des Treibers wird eine schnellere Reaktionszeit erhalten. Der Anschluss IN_A wird außerdem rückgekoppelt, um die Transkonduktanz gm des Verstärkers 320 anzupassen, um die Stabilität der Leitungsschleife dynamisch einzustellen.

Um eine niedrige Ausgangsspannung zu erhalten, kann der zweite Transistor M2 im linearen Bereich betrieben werden, was dazu führt, dass der Treiberstrom I_{DRV} eine Funktion einer Ausgangsspannung (d. h. des Spannungspegels am ersten Ende D des Transistors M2) ist. Einer der Vorteile, die durch den Betrieb des zweiten Transistors M2 im linearen Bereich erzielt wird, umfasst die Tatsache, dass die Fehlanpassung, die durch die Schwankungen der Schwellenwertspannungen der Transistoren M1 und M2 verursacht wird, verringert wird. Der Grund hierfür ist, dass die Stromgleichung im linearen Bereich eine Funktion von (V_{Gate-Source}-V_{Schwellenwert}) anstelle der quadratischen Funktion im Sättigungsbereich ist. Außerdem wird die Schleifenverstärkung der Treiberschaltung 300 verringert, wenn der Transistor M2 im linearen Bereich betrieben wird.

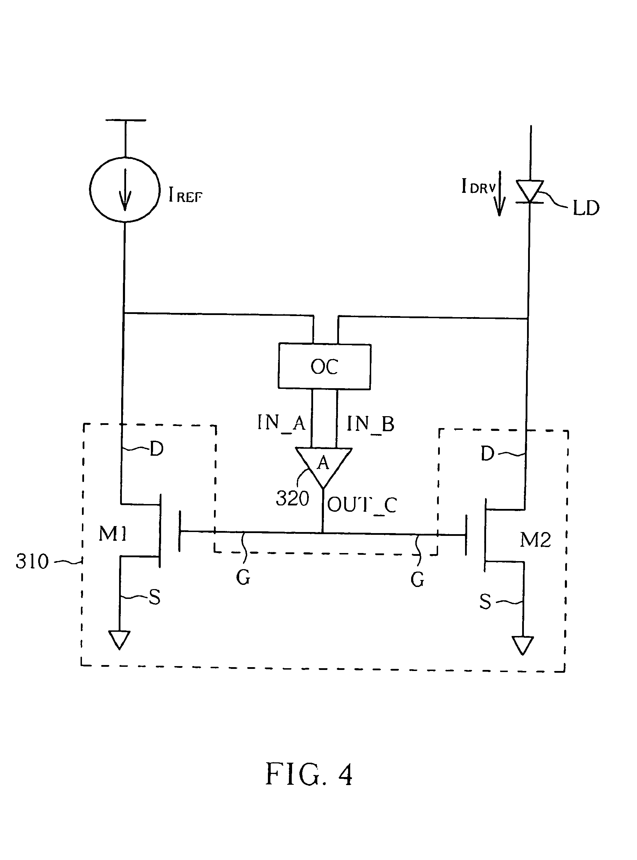

In dieser Hinsicht sollte der Offset des Verstärkers 320 betrachtet werden. Um die Schleifenverstärkung zu erhöhen und den Offset des Verstärkers 320 zu beseitigen oder zu löschen, führt die vorliegende Erfindung gemäß einem Ausführungsbeispiel eine Offsetlöschungsschaltung in der erfindungsgemäßen Treiberschaltung ein. Eines dieser Ausführungsbeispiele ist als Konzept in Fig. 4 dargestellt, in der eine Offsetlöschungsschaltung OC genutzt wird, um eine Offset-Spannung des Verstärkers 320 zu löschen bzw. zu beseitigen. Die Offsetlöschungsschaltung OC ist mit dem Verstärker 320 und dem Stromspiegel 310 verbunden.

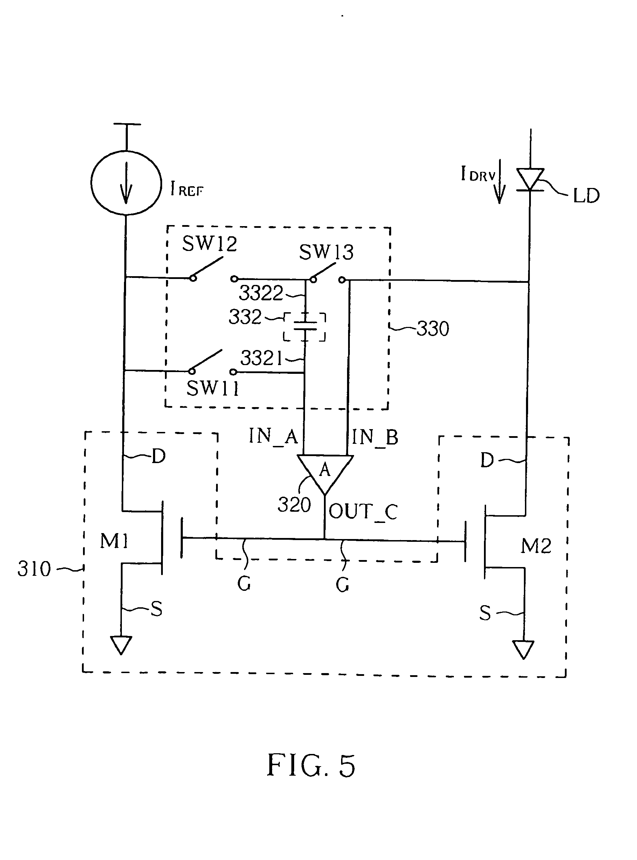

In manchen Ausführungsbeispielen der vorliegenden Erfindung kann die Schaltkondensatorbauweise übernommen werden, um die Offsetlöschungsschaltung zu implementieren. Jedoch ist die Erfindung in ihrem Umfang nicht auf bestimmte Arten von Offsetlöschungsschaltungen beschränkt. Jede beliebige Schaltung, die die Offset-Spannung des Verstärkers 320 löschen oder beseitigen kann, ist ausreichend. Ein genaues Schaltkreisdiagramm bezüglich der Offsetlöschungsschaltung 330 auf der Grundlage der Schaltkondensatorbauweise ist in Fig. 5 als ein Ausführungsbeispiel der vorliegenden Erfindung gezeigt.

In diesem Ausführungsbeispiel wird eine Nullabgleich-Offsetlöschungstechnik genutzt, indem ein Differentialeingangs-Einzelausgangs-Verstärker 320 mit einer kapazitiven Komponente 332, in Reihe verbunden mit einem Eingangsanschluss des Verstärkers 320, verwendet wird. Die Offsetlöschungsschaltung 330 wird in zwei unterschiedlichen Phasen betrieben: eine Mess- und Speicherphase und eine Betriebsphase. Während der Mess- und Speicherphase ist der Verstärker 320 als ein Einheitsverstärker ausgelegt, bei dem eine Referenzspannung an die kapazitive Komponente 332 angelegt wird. Die Offset-Spannung V_{OS} des Verstärkers 320 ist dann im Wesentlichen gleich zu einer Spannungsdifferenz zwischen einem Ausgangsanschluss OUT_C und dem Eingangsanschluss IN_A des Verstärkers 320, und somit wird die Offset-Spannung V_{OS} gemessen (erfasst) und in der kapazitiven Komponente 332 gespeichert, wobei V_{OS} = V_{IN}-V_{O} (Spannungspegel jeweils an den Eingangs- und Ausgangsanschlüssen des Verstärkers 320). Dementsprechend wird die Offset-Spannung V_{OS} während der Betriebsphase mit der Spannung, die während der Mess- und Speicherphase in der Kondensatorkomponente 332 gespeichert wurde, ausgeglichen, wodurch erzielt wird, dass die Ausgangsspannung des Verstärkers 320 gleich der Eingangsspannung des Verstärkers 320 ist. Die Offsetlöschungsschaltung 330 wird durch eine Umschaltvorrichtung mit SW11 - SW13 gesteuert, um zwischen den zwei Phasen umzuschalten.

Wie in Fig. 5 gezeigt, umfasst die Offsetlöschungsschaltung 330 eine kapazitive Komponente 332 und eine Umschaltvorrichtung mit einem ersten Schalter SW11, einem zweiten Schalter SW12 und einem dritten Schalter SW13. Die kapazitive Komponente 322 weist ein erstes Ende 3321 und ein zweites Ende 3322 auf. Das erste Ende 3321 der kapazitiven Komponente 332 ist mit dem ersten Eingangsanschluss IN_A des Verstärkers 320 verbunden. Der erste Schalter SW11 ist zwischen das erste Ende D des ersten Transistors M1 und das erste Ende 3321 der kapazitiven Komponente 332 geschaltet, der zweite Schalter SW12 ist zwischen das zweite Ende 3322 der kapazitiven Komponente 332 und das erste Ende D des ersten Transistors M1 geschaltet, und ein dritter Schalter SW13 ist zwischen das zweite Ende 3322 der kapazitiven Komponente 332 und das erste Ende D des zweiten Transistors M2 geschaltet. Die kapazitive Komponente 332 ist ausgelegt, die Offset-Spannung zu messen und zu speichern, wenn der erste Schalter SW11 und der dritte Schalter SW13 leitend (d. h. geschlossen) sind und der zweite Schalter SW12 nicht-leitend (d. h. geöffnet) ist. Währenddessen wird die Offset-Spannung V_{OS} unter Verwendung der kapazitiven Komponente 332 gemessen und gespeichert. Nachdem die Offset-Spannung V_{OS} in der kapazitiven Komponente 322 gespeichert und gemessen wurde, wird die Offsetlöschungsschaltung 30 dementsprechend in der Betriebsphase betätigt. Währenddessen ist die Offsetlöschungsschaltung 330 ausgelegt, die Offset-Spannung V_{OS} zu löschen bzw. zu beseitigen, wobei der zweite Schalter SW12 leitend und der erste Schalter SW11 und der dritte Schalter SW13 nicht-leitend sind. Dadurch wird die Offset-Spannung V_{OS} aufgehoben und der Treiberstrom I_{DRV} wird aufgrund der Verbesserung der Leistungsfähigkeit des Verstärkers 320 mit höherer Genauigkeit erzeugt.

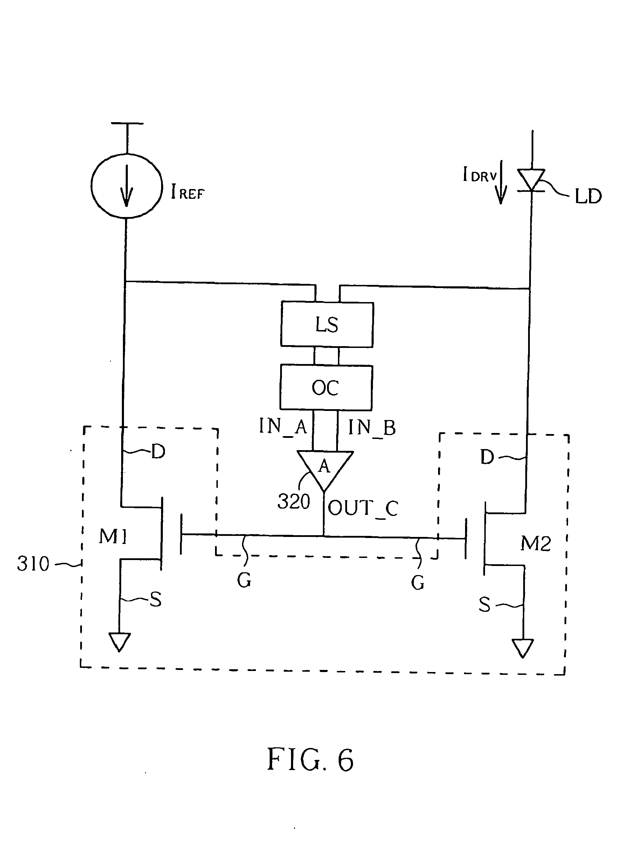

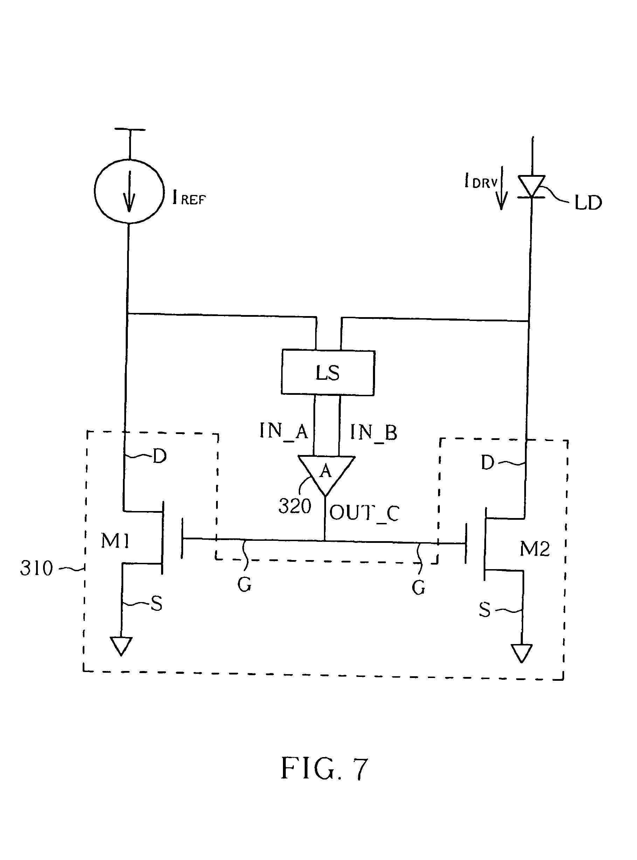

In manchen Anwendungen muss die Ausgangsspannung der Treiberschaltung große Bereiche abdecken. Somit sollte auch der Eingangs-Gleichtakt-Bereich des Verstärkers 320 beachtet werden. In dieser Hinsicht gliedert die vorliegende Erfindung weiterhin eine Pegelumsetzschaltung in die erfindungsgemäße Treiberschaltung ein, und ein entsprechendes konzeptionelles Schaltkreisdiagramm ist in Fig. 6 gezeigt, wobei die Pegelumsetzschaltung mit "LS" bezeichnet ist, während die Offsetlöschungsschaltung mit "OC" bezeichnet ist. In manch anderen Ausführungsbeispielen der vorliegenden Erfindung kann die erfindungsgemäße Treiberschaltung auch nur eine Pegelumsetzschaltung, ohne eine Offsetlöschungsschaltung, umfassen, was konzeptionell in Fig. 7 gezeigt ist. In diesem Ausführungsbeispiel kann die Pegelumsetzschaltung LS direkt mit dem Verstärker 320 und dem Stromspiegel 310 verbunden sein und ist ausgelegt, einen Umsetzspannungspegel V_{LS} am ersten Eingangsanschluss IN_A und am zweiten Eingangsanschluss IN_B des Verstärkers 320 anzulegen.

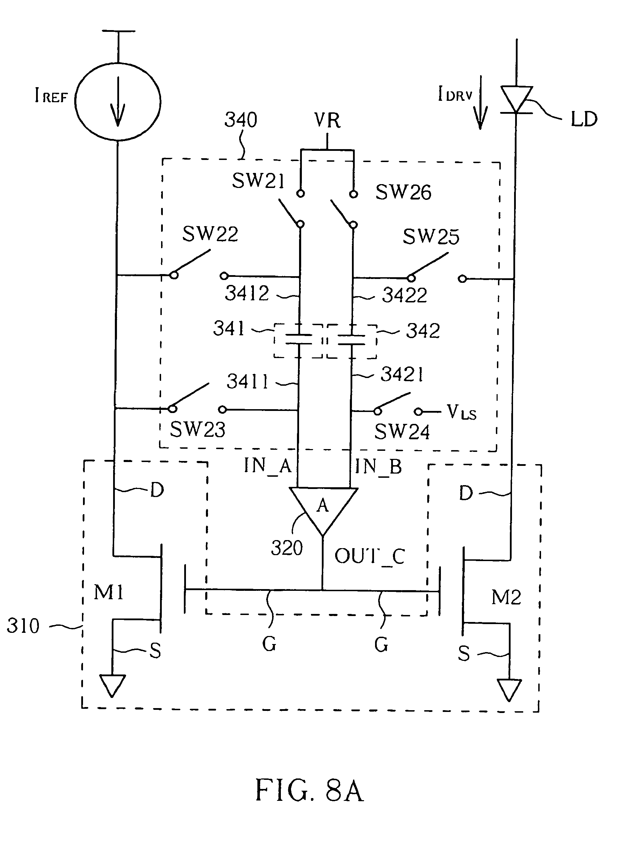

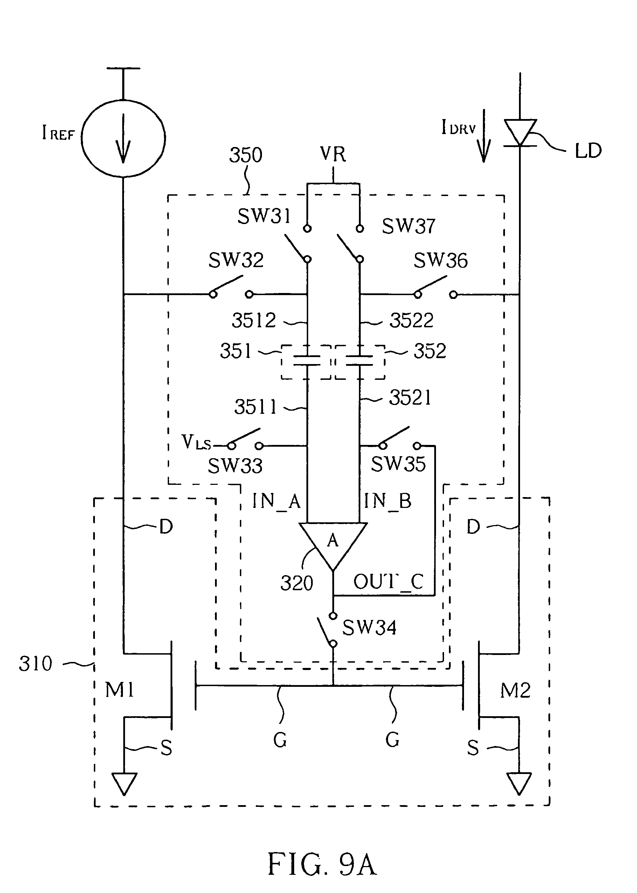

Üblicherweise kann das Hinzufügen der Pegelumsetzschaltung einen weiteren Pol zu dem gesamten System (d. h. der Treiberschaltung) hinzufügen, was zu Fragen der Stabilität führt. Somit stellt die vorliegende Erfindung eine spezielle Schaltungskonfiguration ohne das Hinzufügen eines weiteren Pols vor. Dieser Lösungsansatz wird durch Kombinieren der Offsetlöschungsschaltung mit der Pegelumsetzschaltung erzielt. Zwei unterschiedliche entsprechende Ausführungsbeispiele einer Offsetlöschungsschaltung und einer Pegelumsetzschaltung und die entsprechenden Betriebsphasen sind jeweils in Fig. 8A bis 8C und 9A bis 9C gezeigt. Die erfindungsgemäßen Offsetlöschungs- und Pegelumsetzschaltungen 340 und 350 sind jeweils mit dem Verstärker 320 und dem Stromspiegel 310 verbunden und werden verwendet, um einen Umsetzspannungspegel V_{LS} am ersten Eingangsanschluss IN_A und am zweiten Eingangsanschluss IN_B des Verstärkers 320 anzulegen und die Offset-Spannung V_{OS} des Verstärkers 320 auszugleichen/zu eliminieren. Im Allgemeinen ist der Umsetzspannungspegel V_{LS} ein adäquates Potential, so dass der Verstärker 320 ohne Vorbehalt aktiv bleiben kann.

Wie in Fig. 8A gezeigt, umfasst die Offsetlöschungs- und Pegelumsetzschaltung 340 eine erste kapazitive Komponente 341, eine zweite kapazitive Komponente 342, einen Spannungsgenerator (nicht gezeigt) und eine Umschaltvorrichtung mit Schaltern SW21 - SW26. Die erste kapazitive Komponente 341 weist ein erste Ende 3411 und ein zweites Ende 3412 auf, wobei das erste Ende 3411 der ersten kapazitiven Komponente 341 mit dem ersten Eingangsanschluss IN_A des Verstärkers 320 verbunden ist. Die zweite kapazitive Komponente 342 weist ein erstes Ende 3421 und ein zweites Ende 3422 auf, wobei das erste Ende 3421 der zweiten kapazitiven Komponente 342 mit dem zweiten Eingangsanschluss IN_B des Verstärkers 320 verbunden ist. Der Spannungsgenerator ist mit dem zweiten Eingangsanschluss IN_B des Verstärkers 320 verbunden und wird verwendet, um den Umsetzspannungspegel V_{LS} zu erzeugen. Wie gezeigt, ist der erste Schalter SW21 zwischen das zweite Ende 3412 der ersten kapazitiven Komponente 341 und eine Referenzspannung VR geschaltet, der zweite Schalter SW22 ist zwischen das zweite Ende 3412 der ersten kapazitiven Komponente 341 und das erste Ende D des ersten Transistors M1 geschaltet, der dritte Schalter SW23 ist zwischen den ersten Eingangsanschluss IN_A des Verstärkers 320 und das erste Ende D des ersten Transistors M1 geschaltet, der vierte Schalter SW24 ist zwischen den zweiten Eingangsanschluss IN_B des Verstärkers 320 und den Spannungsgenerator, der den Spannungspegel V_{LS} bereitstellt, geschaltet, der fünfte Schalter SW25 ist zwischen das zweite Ende 3422 der zweiten kapazitiven Komponente 342 und das erste Ende D des zweiten Transistors M2 geschaltet, und ein sechster Schalter SW26 ist zwischen die Referenzspannung VR und das zweite Ende 3422 der zweiten kapazitiven Komponente 342 geschaltet.

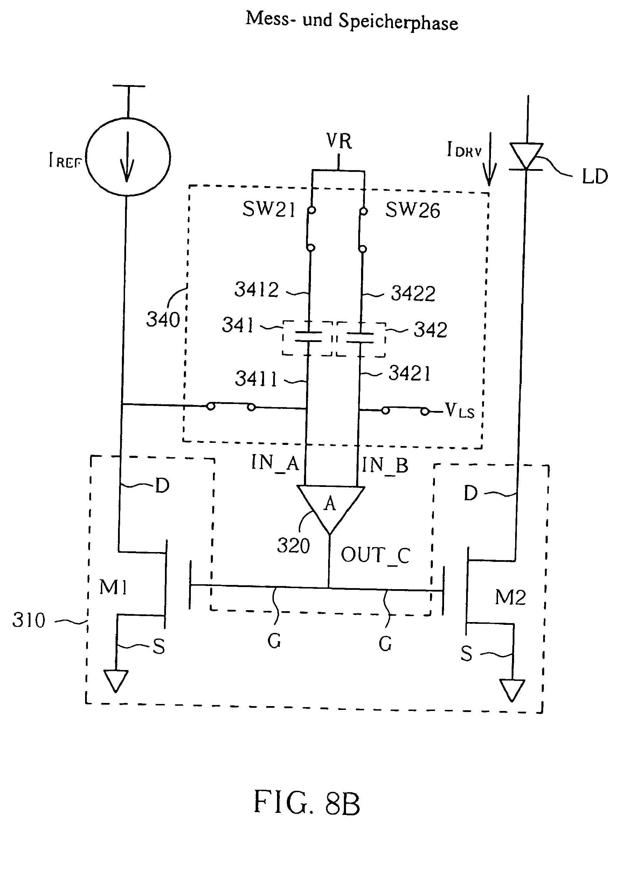

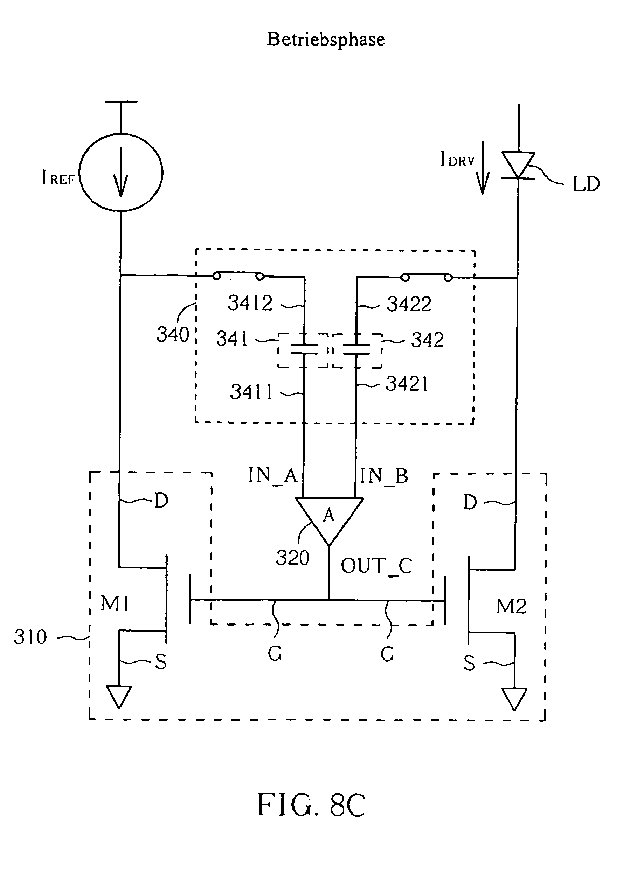

Wie in Fig. 8B und 8C gezeigt, wird die Offsetlöschungs- und Pegelumsetzschaltung 340 durch Umschalten der Umschaltvorrichtung in einer Mess- und Speicherphase und einer Betriebsphase betrieben. Während der Mess- und Speicherphase ist die Offsetlöschungs- und Pegelumsetzschaltung 340 ausgelegt, die Offset-Spannung Vos und den Umsetzspannungspegel V_{LS} zu messen (zu erfassen) und zu speichern, wofür die erste kapazitive Komponente 341 und die zweite kapazitive Komponente 342 verwendet werden, wobei der erste Schalter SW21, der dritte Schalter SW23, der vierte Schalter SW24 und der sechste Schalter SW26 leitend sind und die anderen Schalter nicht-leitend sind. Dementsprechend ist die Offsetlöschungs- und Pegelumsetzschaltung 340 während der Betriebsphase ausgelegt, die Offsetspannung V_{OS} zu eliminieren und den Umsetzspannungspegel V_{LS} am ersten Eingangsanschluss IN_A und am zweiten Eingangsanschluss IN_B des Verstärkers 320 anzulegen, wofür die erste kapazitive Komponente 341 und die zweite kapazitive Komponente 342 verwendet werden, wobei der zweite Schalter SW22 und der fünfte Schalter SW25 leitend und die anderen Schalter nicht-leitend sind.

Unter Bezugnahme auf Fig. 9A zeigt Fig. 9A ein weiteres Ausführungsbeispiel der Offsetlöschungs- und Pegelumsetzschaltung der vorliegenden Erfindung. Im Vergleich bezieht sich einer der Unterschiede zwischen dem in Fig. 8A gezeigten Ausführungsbeispiel und dem in Fig. 9A gezeigten Ausführungsbeispiel auf Merkmale, dass die Offsetlöschungs- und Pegelumsetzschaltung 350 der Fig. 9A die Offsetlöschung und Pegelumsetzung erzielen kann, während der Stromspiegel 310 gleichzeitig den Treiberstrom I_{DRV} erzeugt, um die Licht ausstrahlende Vorrichtung LD anzusteuern. Der Grund hierfür ist, dass die Offsetlöschungs- und Pegelumsetzschaltung 350 der Fig. 9A während der Mess- und Speicherphase betrieben wird, während der Schalter SW34 geöffnet ist, was dazu führt, dass die Offsetlöschungs- und Pegelumsetzschaltung 350 potenzialfrei ist. Somit ist keiner der Transistoren M1 und M2 in die Löschungs- und Pegelumsetzungsschleife, die von der Offsetlöschungs- und Pegelumsetzschaltung 350 aufgebaut wird, eingebunden. Dadurch kann die Offsetlöschungs- und Pegelumsetzschaltung 350 den Offsetlöschungsvorgang und den Pegelumsetzungsvorgang erzielen, ohne die Ansteuerung der Licht ausstrahlenden Vorrichtung LD zu beeinträchtigen.

Wie in Fig. 9A gezeigt, umfasst die Offsetlöschungs- und Pegelumsetzschaltung 350 genauer eine erste kapazitive Komponente 351, eine zweite kapazitive Komponente 352, einen Spannungsgenerator (nicht gezeigt) und eine Umschaltvorrichtung mit Schaltern SW31 - SW37. Die erste kapazitive Komponente 351 weist ein erste Ende 3511 und ein zweites Ende 3512 auf, wobei das erste Ende 3511 der ersten kapazitiven Komponente 351 mit dem ersten Eingangsanschluss IN_A des Verstärkers 320 verbunden ist. Die zweite kapazitive Komponente 352 weist ein erstes Ende 3521 und ein zweites Ende 3522 auf, wobei das erste Ende 3521 der zweiten kapazitiven Komponente 352 mit dem zweiten Eingangsanschluss IN_B des Verstärkers 320 verbunden ist. Der Spannungsgenerator ist mit dem zweiten Eingangsanschluss IN_B des Verstärkers 320 verbunden und wird verwendet, um den Umsetzspannungspegel V_{LS} zu erzeugen. Wie gezeigt, ist der erste Schalter SW31 zwischen das zweite Ende 3512 der ersten kapazitiven Komponente 351 und die Referenzspannung VR geschaltet, der zweite Schalter SW32 ist zwischen das zweite Ende 3512 der ersten kapazitiven Komponente 351 und das erste Ende D des ersten Transistors M1 geschaltet, der dritte Schalter SW33 ist zwischen den ersten Eingangsanschluss IN_A des Verstärkers 320 und den Spannungsgenerator, der den Spannungspegel V_{LS} bereitstellt, geschaltet, der vierte Schalter SW34 ist zwischen den Ausgangsanschluss OUT_C des Verstärkers 320 und das Steuerende G des ersten Transistors M1 geschaltet, der fünfte Schalter SW35 ist zwischen den Ausgangsanschluss OUT_C des Verstärkers 320 und den zweiten Eingangsanschluss IN_B des Verstärkers 320 geschaltet, der sechste Schalter SW36 ist zwischen das zweite Ende 3522 der zweiten Kondensatorkomponente 352 und das erste Ende D des zweiten Transistors M2 geschaltet, und ein siebter Schalter SW37 ist zwischen die Referenzspannung VR und das zweite Ende 3522 der zweiten kapazitiven Komponente 352 geschaltet.

Das Gate G des ersten Transistors M1 kann als V_{LS} verwendet werden, um eine Ladungsteilung zu vermeiden, wenn der Offsetlöschungsmodus zum Normalmodus umgeschaltet wird, und somit ein Rückkoppeln zur zweiten kapazitiven Komponente 352, was zu einem Fehler des gespeicherten Offsets führt.

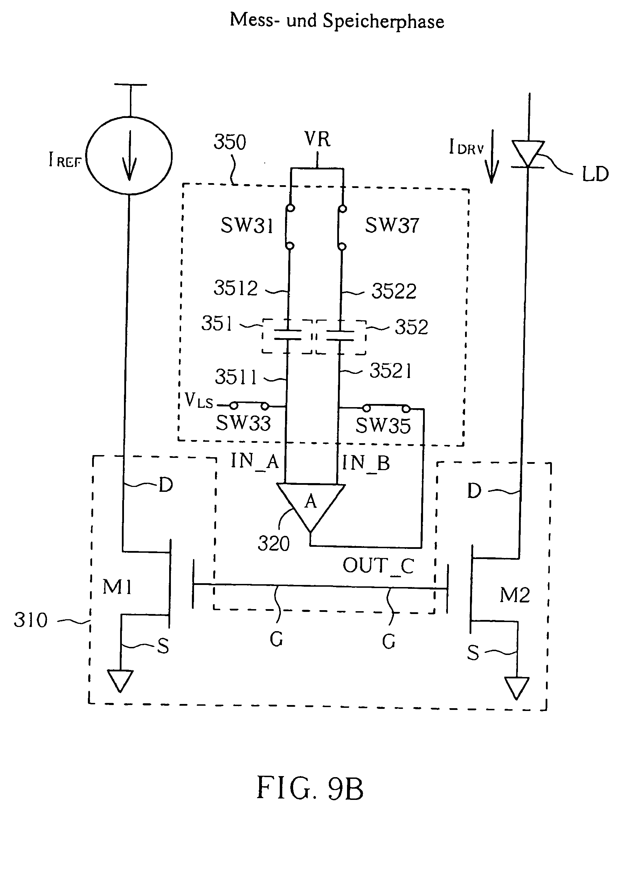

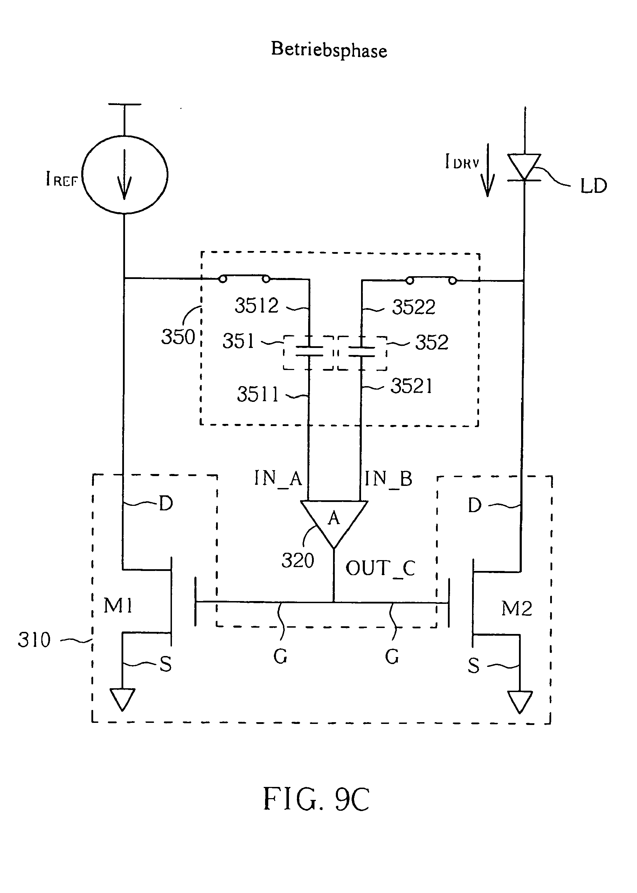

Während der Mess- und Speicherphase ist die Offsetlöschungs- und Pegelumsetzschaltung 350, wie in Fig. 9B gezeigt, ausgelegt, die Offset-Spannung Vos und den Umsetzspannungspegel V_{LS} zu messen (zu erfassen) und zu speichern, wofür die erste kapazitive Komponente 351 und die zweite kapazitive Komponente 352 verwendet werden, wobei der erste Schalter SW31, der dritte Schalter SW33, der fünfte Schalter SW35 und der siebte Schalter SW37 leitend sind und die anderen Schalter nicht-leitend sind. Dementsprechend ist die Offsetlöschungs- und Pegelumsetzschaltung während der Betriebsphase, wie in Fig. 9C gezeigt, ferner ausgelegt, die Offsetspannung V_{OS} zu eliminieren und den Umsetzspannungspegel V_{LS} am ersten Eingangsanschluss IN_A und am zweiten Eingangsanschluss IN_B des Verstärkers 320 anzulegen, wofür die erste kapazitive Komponente 351 und die zweite kapazitive Komponente 352 verwendet werden, wobei der zweite Schalter SW32, der vierte Schalter SW34 und der sechste Schalter SW36 leitend und die anderen Schalter nicht-leitend sind.

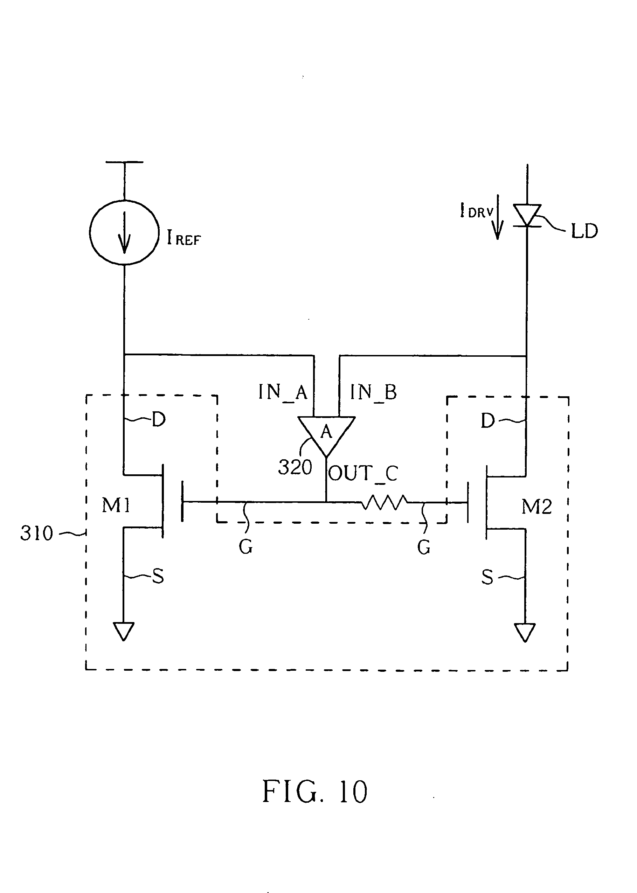

Allgemein gilt: je größer die Treiberschaltung ist, desto größer ist die eingebrachte Gatekapazität. Die Parasitärkapazität des Transistors der Treiberschaltung dient als dominanter Pol des gesamten Systems (d. h. der Treiberschaltung) und bestimmt die Bandbreite der Treiberschaltung. In der Tat fügt der Transistor der Treiberschaltung einen weiteren Hochfrequenzpol zur Treiberschaltung hinzu und bewegt sich außerdem zur Niederfrequenzrichtung, wenn die Ausgangsspannung der Treiberschaltung ansteigt. Somit ist der zweite nicht-dominante Pol zu beachten, um die Schleifenstabilität der Treiberschaltung zu bestimmen. Um die Stabilität der erfindungsgemäßen Treiberschaltung sicherzustellen, führt die erfindungsgemäße Treiberschaltung in manchen Ausführungsbeispielen einen Zero-Nulling-Widerstand ein, die Gates der Transistoren M1 und M2 der Treiberschaltung 300 zu koppeln, um den dominanten Pol aufzuheben. Solch ein Ausführungsbeispiel ist in Fig. 10 gezeigt, wobei eine Widerstandskomponente 311 verwendet und zwischen den Ausgangsanschluss OUT_C des Verstärkers 320 und das Steuerende G des zweiten Transistors M2 geschaltet ist. Als Folge verursachen die Widerstandkomponente 311 und die Gate-Parasitärkapazität des zweiten Transistors M2 eine zusätzliche Null, und ein zweiter nicht-dominanter Pol der Treiberschaltung 300 kann aufgehoben werden, indem der Widerstandswert der Widerstandskomponente 311 geeignet gewählt wird.

Weiterhin wird außerdem ein dynamisch einstellbares Schleifenstabilitätsschema durch Rückkoppeln des ersten Eingangsanschlusses IN_A in Fig. 10 vorgeschlagen, um die Transkonduktanz gm des Verstärkers 320 zu steuern. Deshalb wird die Schleifenbandbreite bei einer niedrigen Ausgangsspannung, wenn sich der sekundäre Pol zur Hochfrequenz bewegt, dynamisch zu einer höheren Frequenz verschoben, wodurch die Anstiegsrate erhöht wird. Bei einer hohen Ausgangsspannung andererseits bewegen sich der sekundäre Pol und Schleifenbandbreite beide hin zu einer niedrigen Frequenz, was die Stabilität erhöht.

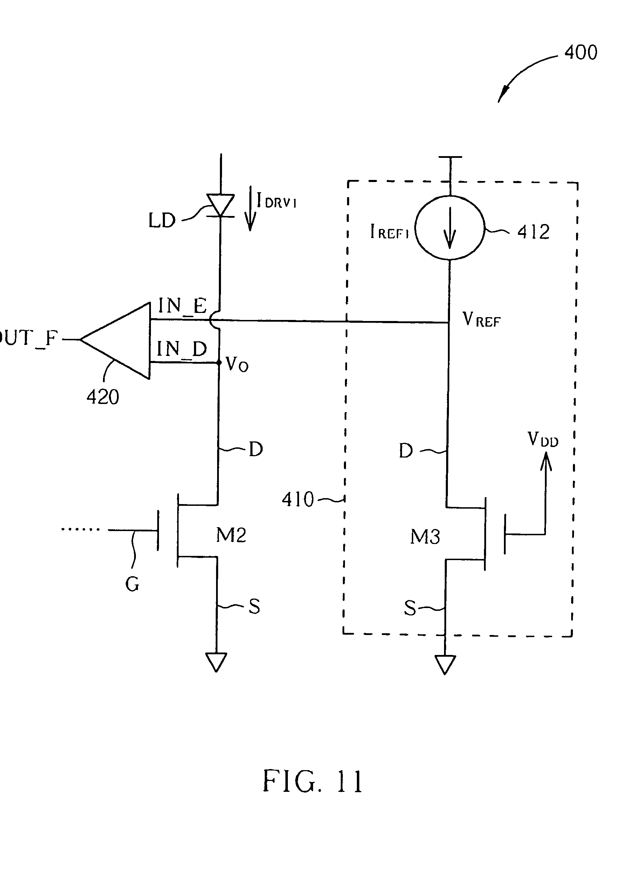

Um zusätzlich die normale Funktion der erfindungsgemäßen Treiberschaltung sicherzustellen, bietet die vorliegende Erfindung ferner eine Fehlererkennungsschaltung, um die Ausgangsspannung der Treiberschaltung (z. B. den Spannungspegel am ersten Ende D des Transistors M2, wie in Fig. 3 gezeigt) zu überwachen. Die erfindungsgemäße Fehlererkennungsschaltung erzeugt ein Fehleranzeigesignal ALM, das einen Fehlerstatus anzeigt, wenn die Treiberschaltung nicht normal arbeiten kann. Insbesondere erfasst die Fehlererkennungsschaltung, ob die Ausgangsspannung der Treiberschaltung niedriger als ein vorbestimmter Minimalwert ist. Wenn die Ausgangsspannung der Treiberschaltung niedriger als der vorbestimmte Minimalwert ist, wird die Treiberschaltung als gestört betrachtet. Eines der Ausführungsbeispiele der erfindungsgemäßen Fehlererkennungsschaltung ist in Fig. 11 dargestellt. Wie in Fig. 11 gezeigt, wird die Fehlererkennungsschaltung 400 verwendet, um die Treiberschaltung (nur die Ausgangsstufe (M2) der Treiberschaltung ist gezeigt) zu erfassen und umfasst eine Referenzspannungs-Erzeugungsschaltung 410 und einen Komparator 420. Der Komparator 420 wird verwendet, um zu erfassen, ob die Ausgangsspannung V_{O} des Transistors M2 niedriger als ein vorbestimmter Minimalwert ist. Der vorbestimmte Minimalwert wird von der Referenzspannungs-Erzeugungsschaltung 410 erzeugt.

Dementsprechend umfasst die Referenzspannungs-Erzeugungsschaltung 410 einen Transistor M3 und eine Referenzstromquelle 412 (die in jeglicher Art einer Konstantstromquelle implementiert sein kann). Der Transistor M3 hat ein erstes Ende D, ein zweites Ende S und ein Steuerende G, wobei das Steuerende G des Transistors M3 mit einer Versorgungsspannung V_{DD} der Treiberschaltung verbunden ist. Die Referenzstromquelle 412 ist mit dem ersten Ende D des Transistors M3 verbunden und ist ausgelegt, einen Referenzstrom I_{REF1} für den Transistor M3 bereitzustellen. Durch Anlegen des höchsten Spannungspegels V_{DD} der Stromversorgung der Treiberschaltung erzeugt das erste Ende D des Transistors M3 den vorbestimmten Minimalwert (d. h. den Spannungspegel V_{REF}), der auch ein zulässiger Minimalwert für die Ausgangsspannung V_{O} der Treiberschaltung ist.

Dann wird die Ausgangsspannung V_{O} vom Komparator 420 mit dem Spannungspegel V_{REF} verglichen. Der Komparator 420 hat einen ersten Eingangsanschluss IN_D, einen zweiten Eingangsanschluss IN_E und einen Ausgangsanschluss OUT_F, wobei der erste Eingangsanschluss IN_D mit dem ersten Ende D des Transistors M2 verbunden ist, um die Ausgangsspannung V_{O} zu empfangen, während der zweite Eingangsanschluss IN_E mit dem ersten Ende D des Transistors M3 verbunden ist, um den Spannungspegel V_{REF} zu empfangen. Da der Spannungspegel V_{REF} der zulässige Minimalwert ist, zeigt das Fehleranzeigesignal ALM, das vom Ausgangsanschluss OUT_F erzeugt wird, den Fehlerstatus der Treiberschaltung an, wenn die Ausgangsspannung V_{O} niedriger als der Spannungspegel V_{REF} ist. Der Betrag des Referenzstroms I_{REF1} wird gemäß dem Verhältnis zwischen den Längenverhältnissen/Aspektverhältnissen der Transistoren M2 und M3 und dem Betrag des Treiberstroms I_{DRV1} bestimmt. Wenn z. B. das Längenverhältnis/Aspektverhältnis des Transistors M2 n-Mal größer als das des Transistors M3 ist, dann ist auch der Treiberstrom I_{DRV1} n-Mal größer als der Referenzstrom I_{REF1}. Dementsprechend wird der Spannungspegel V_{REF} durch einen solchen Referenzstrom I_{REF1} bestimmt.

Auf der Grundlage der oben genannten Fehlererkennungsschaltung bietet die vorliegende Erfindung ferner ein Fehlererkennungsverfahren. Das erfindungsgemäße Fehlererkennungsverfahren wird verwendet, um einen Fehlerstatus einer Treiberschaltung, die einen Treiberstrom erzeugt, zu erfassen. Das Fehlererkennungsverfahren umfasst: Erzeugen einer Referenzspannung (z. B. Spannungspegel V_{REF}) durch Anlegen einer Versorgungsspannung (z. B: Referenzspannung V_{DD}) an ein Gate eines zweiten Transistors (z. B. des Transistors M3) und Anlegen eines Referenzstroms (z. B. Referenzstrom I_{REF1}) an ein erstes Ende des zweiten Transistors; und Erzeugen eines Fehleranzeigesignals durch Vergleichen eines Spannungspegels des ersten Endes eines ersten Transistors mit einem Spannungspegel des ersten Endes des zweiten Transistors, wobei der erste Transistor eine Ausgangsstufe der Treiberschaltung (z. B. der Transistor M2) sein kann. Zusätzlich zeigt das Fehlererkennungssignal einen Fehlerstatus der Treiberschaltung an, wenn der Spannungspegel des ersten Endes des ersten Transistors geringer als der Spannungspegel des ersten Endes des zweiten Transistors ist. Der Betrag des Referenzstroms ist K-mal kleiner als der des Treiberstroms, und eine Größe des zweiten Transistors ist K-mal kleiner als eine Größe des ersten Transistors.

Eine Bezugnahme in der Beschreibung auf "ein Ausführungsbeispiel" bedeutet, das ein bestimmtes Merkmal, eine bestimmte Struktur oder Eigenschaft, die in Verbindung mit dem Ausführungsbeispiel beschrieben wird, in zumindest einer Implementierung enthalten ist. Das Auftreten des Begriffs "in einem Ausführungsbeispiel" an verschiedenen Stellen in der Beschreibung bezieht sich nicht notwendigerweise auf das gleiche Ausführungsbeispiel.

Auch wenn Ausführungsbeispiele in einer Ausdrucksweise beschrieben wurden, die speziell für strukturelle Merkmale und/oder methodische Vorgehensweisen genutzt wird, ist es selbstverständlich, dass der beanspruchte Anmeldungsgegenstand nicht auf die bestimmten, beschriebenen Merkmale oder Vorgehensweisen beschränkt werden kann. Stattdessen sind die bestimmten Merkmale und Vorgehensweisen als beispielhafte Formen der Implementierung des beanspruchten Anmeldungsgegenstandes offenbart.

Zusammengefasst nutzt die vorliegende Erfindung einen Verstärker und einen Strom, um zu bewirken, dass die erfindungsgemäße Treiberschaltung einen Treiberstrom mit hoher Genauigkeit bereitstellt. Da die Leistungsfähigkeit des Verstärkers für die Genauigkeit des Treiberstroms ziemlich wichtig ist, nutzt die vorliegende Erfindung ferner eine Offsetlöschungsschaltung und/oder eine Pegelumsetzschaltung, um die Leistungsfähigkeit des Verstärkers zu verbessern. Dabei offenbart die vorliegende Erfindung außerdem eine Fehlererkennungsschaltung, um die normale Funktion der erfindungsgemäßen Treiberschaltung sicherzustellen.

Die Fachleute auf dem Gebiet werden leicht erkennen, dass viele Modifikationen und Abänderungen der Vorrichtung und des Verfahrens durchgeführt werden können, während die Lehren der Erfindung beibehalten werden. Dementsprechend sollte die obige Offenbarung als nur durch den Umfang der beigefügten Ansprüche beschränkt betrachtet werden.

Zusammengefasst offenbart die vorliegende Erfindung eine Treiberschaltung mit niedriger Ausgangsspannung für eine Lichtausgabevorrichtung. Außerdem wird eine Offsetspannungslöschungsschaltung und/oder eine Pegelumsetzungsschaltung in die Treiberschaltung integriert, um die Genauigkeit des Treiberstroms zu erhöhen. Zusätzlich wird eine Fehlererkennungsvorrichtung und ein Fehlererkennungsverfahren genutzt, um die minimale Ausgangsspannung der erfindungsgemäßen Treiberschaltung adaptiv zu erfassen.

## Patentansprüche

1. Treiberschaltung (300) zum Ansteuern einer Licht ausstrahlenden Vorrichtung (LD), umfassend:
einen Stromspiegel (310) mit einem ersten Transistor (M1) und einem zweiten Transistor (M2), von denen jeder ein erstes Ende (D), ein zweites Ende (S) und ein Steuerende (G) aufweist, wobei der erste Transistor (M1) ausgelegt ist, einen Referenzstrom (I_{REF}) am ersten Ende (D) des ersten Transistors (M1) zu empfangen, und der zweite Transistor (M2) ausgelegt ist, einen Treiberstrom (I_{DRV}) am ersten Ende (D) des zweiten Transistors (M2) zu erzeugen, und das erste Ende (D) des zweiten Transistors (M2) direkt mit der Licht ausstrahlenden Vorrichtung (LD) verbunden ist; und
einen Verstärker (320) mit einem ersten Eingangsanschluss (IN_A), einem zweiten Eingangsanschluss (IN_B) und einem Ausgangsanschluss (OUT_C), wobei der erste Eingangsanschluss (IN_A) mit dem ersten Ende (D) des ersten Transistors (M2) verbunden ist, der zweite Eingangsanschluss (IN_B) mit dem ersten Ende (D) des zweiten Transistors (M2) verbunden ist, und der Ausgangsanschluss (OUT_C) mit den Steuerenden (G) des ersten und des zweiten Transistors (M1, M2) verbunden ist,
**dadurch gekennzeichnet, dass**
die Treiberschaltung (300) ferner eine Offsetlöschungsschaltung (OC) umfasst, die mit dem Verstärker (320) und dem Stromspiegel (310) verbunden ist, um eine Offset-Spannung des Verstärkers (320) zu eliminieren.

2. Treiberschaltung (300) nach Anspruch 1, wobei die Offsetlöschungsschaltung (330) umfasst:
eine kapazitive Komponente (332) mit einem ersten Ende (3321) und einem zweiten Ende (3322), wobei das erste Ende (3321) der kapazitiven Komponente (332) mit dem ersten Eingangsanschluss (IN_A) des Verstärkers (320) verbunden ist; und
eine Umschaltvorrichtung mit einem ersten Schalter (SW11), der zwischen das erste Ende (D) des ersten Transistors (M1) und das erste Ende (3321) der kapazitiven Komponente (332) geschaltet ist, einem zweiten Schalter (SW12), der zwischen das zweite Ende (3322) der kapazitiven Komponente (332) und das erste Ende (D) des ersten Transistors (M1) geschaltet ist, und einem dritten Schalter (SW13), der zwischen das zweite Ende (3322) der kapaztiven Komponente (332) und das erste Ende (D) des zweiten Transistors (M2) geschaltet ist;
wobei die Offsetlöschungsschaltung (332) ausgelegt ist, die Offset-Spannung (V_{OS}) zu messen und zu speichern, wenn der erste Schalter (SW11) und der dritte Schalter (SW13) leitend sind und der zweite Schalter (SW12) nicht-leitend ist, und ferner ausgelegt ist, die Offset-Spannung (V_{OS}) gemäß der gemessenen und gespeicherten Offset-Spannung zu eliminieren, wenn der zweite Schalter (SW12) leitend und der erste Schalter (SW11) und der dritte Schalter (SW13) nicht-leitend sind.

3. Treiberschaltung (300) nach Anspruch 1, **dadurch gekennzeichnet, dass**:
die Offsetlöschungsschaltung (OC) eine Offsetlöschungs- und Pegelumsetzschaltung (340, 350) ist, die mit dem Verstärker (320) und dem Stromspiegel (310) verbunden ist, um einen Umsetzspannungspegel (V_{LS}) am ersten und zweiten Eingangsanschluss (IN_A, IN_B) des Verstärkers (320) anzulegen und eine Offset-Spannung V_{OS} des Verstärkers (320) zu eliminieren.

4. Treiberschaltung (300) nach Anspruch 3, wobei die Offsetlöschungs- und Pegelumsetzschaltung (340) umfasst:
eine erste kapazitive Komponente (341) mit einem erste Ende (3411) und einem zweite Ende (3412), wobei das erste Ende (3411) der ersten kapazitiven Komponente (341) mit dem ersten Eingangsanschluss (IN_A) des Verstärkers (320) verbunden ist;
eine zweite kapazitive Komponente (342) mit einem erstes Ende (3421) und einem zweiten Ende (3422), wobei das erste Ende (3421) der zweiten kapazitiven Komponente (342) mit dem zweiten Eingangsanschluss (IN_B) des Verstärkers (320) verbunden ist;
einen Spannungsgenerator, der mit dem zweiten Eingangsanschluss (IN_B) des Verstärkers (320) verbunden ist, um den Umsetzspannungspegel (V_{LS}) zu erzeugen;
und
eine Umschaltvorrichtung mit einem ersten Schalter (SW21), der zwischen das zweite Ende (3412) der ersten kapazitiven Komponente (341) und eine Referenzspannung (VR) geschaltet ist, einem zweiten Schalter (SW22), der zwischen das zweite Ende (3412) der ersten kapazitiven Komponente (341) und das erste Ende (D) des ersten Transistors (M1) geschaltet ist, einem dritten Schalter (SW23), der zwischen den ersten Eingangsanschluss (IN_A) des Verstärkers (320) und das erste Ende (D) des ersten Transistors (M1) geschaltet ist, einem vierten Schalter (SW24), der zwischen den zweiten Eingangsanschluss (IN_B) des Verstärkers (320) und den Spannungsgenerator geschaltet ist, einem fünften Schalter (SW25), der zwischen das zweite Ende (3422) der zweiten kapazitiven Komponente (342) und das erste Ende (D) des zweiten Transistors (M2) geschaltet ist, und einem sechsten Schalter (SW26), der zwischen die Referenzspannung (VR) und das zweite Ende (3422) der zweiten kapazitiven Komponente (342) geschaltet ist;
wobei die Offsetlöschungs- und Pegelumsetzschaltung 340 ausgelegt ist, die Offset-Spannung (V_{OS}) und den Umsetzspannungspegel (V_{LS}) zu messen und zu speichern, wofür die erste kapazitive Komponente (341) und die zweite kapazitive Komponente (342) verwendet werden, wenn der erste Schalter (SW21), der dritte Schalter (SW23), der vierte Schalter (SW24) und der sechste Schalter (SW26) leitend sind und die anderen Schalter nicht-leitend sind, und ferner ausgelegt ist, die Offsetspannung (V_{OS}) zu eliminieren und den Umsetzspannungspegel (V_{LS}) am ersten Eingangsanschluss (IN_A) und am zweiten Eingangsanschluss (IN_B) des Verstärkers (320) anzulegen, wofür die erste kapazitive Komponente (341) und die zweite kapazitive Komponente (342) verwendet werden, wenn der zweite Schalter (SW22) und der fünfte Schalter (SW25) leitend und die anderen Schalter nicht-leitend sind.

5. Treiberschaltung (300) nach Anspruch 3, wobei die Offsetlöschungs- und Pegelumsetzschaltung (350) umfasst:
eine erste kapazitive Komponente (351) mit einem ersten Ende (3511) und einem zweiten Ende (3512), wobei das erste Ende (3511) der ersten Kondensatorkomponente (351) mit dem ersten Eingangsanschluss (IN_A) des Verstärkers (320) verbunden ist;
eine zweite kapazitive Komponente (352) mit einem ersten Ende (3521) und einem zweiten Ende (3522), wobei das erste Ende (3521) der zweiten kapazitiven Komponente (352) mit dem zweiten Eingangsanschluss (IN_B) des Verstärkers (320) verbunden ist;
einen Spannungsgenerator, der mit dem zweiten Eingangsanschluss (IN_B) des Verstärkers (320) verbunden ist, um den Umsetzspannungspegel (V_{LS}) zu erzeugen;
und
eine Umschaltvorrichtung mit einem ersten Schalter (SW31), der zwischen das zweite Ende (3512) der ersten kapazitiven Komponente (351) und eine Referenzspannung (VR) geschaltet ist, einem zweiten Schalter (SW22), der zwischen das zweite Ende (3512) der ersten kapazitiven Komponente (351) und das erste Ende (D) des ersten Transistors (M1) geschaltet ist, einem dritten Schalter (SW33), der zwischen den ersten Eingangsanschluss (IN_A) des Verstärkers (320) und den Spannungsgenerator geschaltet ist, einem vierten Schalter (SW34), der zwischen den Ausgangsanschluss (OUT_C) des Verstärkers (320) und das Steuerende (G) des ersten Transistors (M1) geschaltet ist, einem fünften Schalter (SW35), der zwischen den Ausgangsanschluss (OUT_C) des Verstärkers (320) und den zweiten Eingangsanschluss (IN_B) des Verstärkers (320) geschaltet ist, einem sechsten Schalter (SW36), der zwischen das zweite Ende (3522) der zweiten kapazitiven Komponente (352) und das erste Ende (D) des zweiten Transistors (M2) geschaltet ist, und einem siebten Schalter (SW37), der zwischen die Referenzspannung (VR) und das zweite Ende (3522) der zweiten kapazitiven Komponente (352) geschaltet ist;
wobei die Offsetlöschungs- und Pegelumsetzschaltung (350) ausgelegt ist, die Offset-Spannung (V_{OS}) und den Umsetzspannungspegel (V_{LS}) zu messen und zu speichern, wofür die erste Kondensatorkomponente (351) und die zweite Kondensatorkomponente (352) verwendet werden, wenn der erste Schalter (SW31), der dritte Schalter (SW33), der fünfte Schalter (SW35) und der siebte Schalter (SW37) leitend sind und die anderen Schalter nicht-leitend sind, und ferner ausgelegt ist, die Offsetspannung (V_{OS}) zu eliminieren und den Umsetzspannungspegel (V_{LS}) am ersten Eingangsanschluss (IN_A) und am zweiten Eingangsanschluss (IN_B) des Verstärkers (320) anzulegen, wofür die erste Kondensatorkomponente (351) und die zweite Kondensatorkomponente (352) verwendet werden, wenn der zweite Schalter (SW32), der vierte Schalter (SW34) und der sechste Schalter (SW36) leitend und die anderen Schalter nicht-leitend sind.

6. Treiberschaltung (300) nach einem der Ansprüche 1 bis 5, ferner umfassend:
eine Pegelumsetzschaltung (LS), die mit dem Verstärker (320) und dem Stromspiegel (310) verbunden ist, die ausgelegt ist, einen Umsetzspannungspegel (V_{LS}) am ersten Eingangsanschluss (IN_A) und am zweiten Eingangsanschluss (IN_B) des Verstärkers (320) bereitzustellen.

7. Treiberschaltung (300) nach einem der Ansprüche 1 bis 6, ferner umfassend:
eine Widerstandskomponente (311), die zwischen den Ausgangsanschluss (OUT_C) des Verstärkers (320) und das Steuerende (G) des zweiten Transistors geschaltet (M2) ist, um eine Null für die Treiberschaltung (300) bereitzustellen.

8. Fehlererkennungsschaltung (400) für eine Treiberschaltung (300) nach einem der Ansprüche 1 bis 7 mit zumindest dem zweiten Transistor (M2), wobei ein erstes Ende (D) des zweiten Transistors (M2) einen Treiberstrom ausgibt, wobei die Fehlererkennungsschaltung (400) umfasst:
eine Referenzspannungs-Erzeugungsschaltung (410), umfassend:
einen dritten Transistor (M3) mit ein ersten Ende (D), einem zweiten Ende (S) und einem Steuerende (G), wobei das Steuerende (G) des dritten Transistors (M3) mit einer Versorgungsspannung (V_{DD}) der Treiberschaltung (300) verbunden ist;
eine Referenzstromquelle (412), die mit dem ersten Ende (D) des dritten Transistors (M3) verbunden und ausgelegt ist, einen Referenzstrom (I_{REF1}) für den dritten Transistor (M3) bereitzustellen; und
einen Komparator (420) mit einem ersten Eingangsanschluss (IN_D), einem zweiten Eingangsanschluss (IN_E) und einem Ausgangsanschluss (OUT_F), wobei der erste Eingangsanschluss (IN_D) mit dem ersten Ende (D) des zweiten Transistors (M2) verbunden ist, der zweite Eingangsanschluss (IN_E) mit dem ersten Ende (D) des dritten Transistors (M3) verbunden ist, wobei der Komparator (420) ausgelegt ist, einen Spannungspegel des ersten Endes (D) des zweiten Transistors (M2) mit einem Spannungspegel des ersten Endes (D) des dritten Transistors (M3) zu vergleichen, um ein Fehleranzeigesignal am Ausgangsanschluss zu erzeugen.

9. Fehlererkennungsschaltung nach Anspruch 8, wobei der Komparator (420) das Fehleranzeigesignal, das einen Fehlerstatus der Treiberschaltung (300) anzeigt, erzeugt, wenn der Spannungspegel des ersten Endes des zweiten Transistors (M2) geringer als der Spannungspegel des ersten Endes des dritten Transistors (M3) ist.

10. Fehlererkennungsschaltung nach Anspruch 8, wobei ein Betrag des Referenzstroms K-mal kleiner als der des Treiberstroms ist und eine Größe des dritten Transistors (M3) K-mal kleiner als eine Größe des zweiten Transistors (M2) ist.

11. Fehlererkennungsverfahren für eine Treiberschaltung (300) nach einem der Ansprüche 1 bis 7 mit zumindest dem zweiten Transistor (M2), wobei ein erstes Ende (D) des zweiten Transistors (M2) einen Treiberstrom ausgibt, wobei das Fehlererkennungsverfahren umfasst:
Erzeugen einer Referenzspannung durch Anlagen einer Spannungsversorgung an einem Gate eines dritten Transistors (M3) und Anlegen eines Referenzstroms an einem ersten Ende des dritten Transistors (M3); und
Erzeugen eines Fehleranzeigesignals durch Vergleichen eines Spannungspegels des ersten Endes des zweiten Transistors (M2) mit einem Spannungspegel des ersten Endes des dritten Transistors (M3).

12. Fehlererkennungsverfahren nach Anspruch 11, wobei das Fehleranzeigesignal einen Fehlerstatus der Treiberschaltung (300) anzeigt, wenn der Spannungspegel des ersten Endes des zweiten Transistors (M2) geringer als der Spannungspegel des ersten Endes des drtitten Transistors (M3) ist.

13. Fehlererkennungsverfahren nach Anspruch 11, wobei ein Betrag des Referenzstroms K-mal kleiner ist als der des Treiberstroms und eine Größe des dritten Transistors (M3) K-mal kleiner als eine Größe des zweiten Transistors (M2) ist.

## Claims

1. Driver circuit (300) for driving a light-emitting device (LD), comprising:
a current mirror (310), having a first transistor (M1) and a second transistor (M2), each having a first end (D), a second end (S) and a control end (G), wherein the first transistor (M1) is configured to receive a reference current (I_{REF}) at the first end (D) of the first transistor (M1), and the second transistor (M2) is configured to generate a driving current (I_{DRV}) at the first end (D) of the second transistor (M2), and the first end (D) of the second transistor (M2) is directly connected to the light-emitting device (LD); and
an amplifier (320), having a first input terminal (IN_A), a second input terminal (IN_B),
and an output terminal (OUT_C), wherein the first input terminal (IN_A) is coupled to the first end (D) of the first transistor (M2), the second input terminal (IN_B) being coupled to the first end (D) of the second transistor (M2), and the output terminal (OUT_C) being coupled to the control ends (G) of the first and second transistors,
**characterized in that**
the driver circuit (3) further comprises an offset cancellation circuit (OC), which is coupled to the amplifier (320) and the current mirror (310), for cancelling an offset voltage of the amplifier (320).

2. Driver circuit (300) according to claim 1, wherein the offset cancellation circuit (330) comprises:
a capacitive component (332), having a first end (3321) and a second end (3322), wherein the first end (3321) of the capacitive component (332) is coupled to the first input terminal (IN_A) of the amplifier (320); and
a switch device, having a first switch (SW11), which is coupled between the first end (D) of the first transistor (M1) and the first end (3321) of the capacitive component (332), a second switch (SW12), which is coupled between the second end (3322) of the capacitive component (332) and the first end (D) of the first transistor (M1), and a third switch (SW13), which is coupled between the second end (3322) of the capacitive component (332) and the first end (D) of the second transistor (M2);
wherein the offset cancellation circuit (332) is configured to sense and store the offset voltage (V_{OS}), when the first switch (SW11) and the third switch (S13) are conductive and the second switch (SW12) is not conductive, and is further configured to cancel the offset voltage (V_{OS}) according to the sensed and stored offset voltage, when the second switch (SW12) is conductive and the first switch (SW11) and third switch (SW13) are not conductive.

3. Driver circuit (300) according to claim 1, **characterized in that**:
the offset cancellation circuit (OC) is an offset cancellation and level shifting circuit (340, 350), which is coupled to the amplifier (320) and the current mirror (310), for applying a shifting voltage level (V_{LS}) to the first and second input terminals (IN_A, IN_B) of the amplifier (320) and for cancelling an offset voltage (V_{OS}) of the amplifier (320).

4. Driver circuit according to claim 3, wherein the offset cancellation and level shifting circuit (340) comprises:
a first capacitive component (341), having a first end (3411) and a second end (3412), wherein the first end (3411) of the first capacitive component (341) is coupled to the first input terminal (IN_A) of the amplifier (320);
a second capacitive component (342), having a first end (3421) and a second end (3422), wherein the first end (3421) of the second capacitive component (342) is coupled to the second input terminal (IN_B) of the amplifier (320);
a voltage generator, coupled to the second input terminal (IN_B) of the amplifier (320), for generating the shifting voltage level (V_{LS}); and
a switch device, having a first switch (SW21), which is coupled between the second end (3412) of the first capacitive component (341) and a reference voltage (VR), a second switch (SW22), which is coupled between the second end (3412) of the first capacitive component (341) and the first end (D) of the first transistor (M1), a third switch (SW23), which is coupled between the first input terminal (IN_A) of the amplifier (320) and the first end (D) of the first transistor (M1), a fourth switch (SW24),
which is coupled between the second input terminal (IN_B) of the amplifier (320) and
the voltage generator, a fifth switch (SW25), which is coupled between the second end (3422) of the second capacitive component (342) and the first end (D) of the second transistor (M2), and a sixth switch (SW26), which is coupled between the reference voltage (VR) and the second end (3422) of the second capacitive component (342);
wherein the offset cancellation and level shifting circuit 340 is configured to sense and
store the offset voltage (V_{OS}) and the shifting voltage (V_{LS}) level by utilizing the first capacitive component (341) and the second capacitive component (342), when the first switch (SW21), the third switch (SW23), the fourth switch (SW24) and the sixth switch (SW26) are conductive and the other switches are not conductive, and is further configured to cancel the offset voltage (V_{OS}) and apply the shifting voltage level (V_{LS}) to the first input terminal (IN_A) and the second input terminal (IN_B) of the amplifier (320) by utilizing the first capacitive component (341) and the second capacitive component (342), when the second switch (SW22) and the fifth switch (SW25) are conductive and the other switches are not conductive.

5. The driver circuit (300) according to claim 3, wherein the offset cancellation and level shifting circuit (350) comprises:
a first capacitive component (351), having a first end (3511) and a second end (3512), wherein the first end (3511) of the first capacitive component (351) is coupled to the first input terminal (IN_A) of the amplifier (320);
a second capacitive component (352), having a first end (3521) and a second end (3522), wherein the first end (3521) of the second capacitive component (352) is coupled to the second input terminal (IN_B) of the amplifier (320);
a voltage generator, which is coupled to the second input terminal (IN_B) of the amplifier (320), for generating the shifting voltage level (V_{LS}); and
a switch device, having a first switch (SW31), which is coupled between the second end (3512) of the first capacitive component (351) and a reference voltage (VR), a second switch (SW22), which is coupled between the second end (3512) of the first capacitive component (351) and the first end (D) of the first transistor (M1), a third switch (SW33), which is coupled between the first input terminal (IN_A) of the amplifier (320) and the voltage generator, a fourth switch (SW34), which is coupled between the output terminal (OUT_C) of the amplifier (320) and the control end (G) of first transistor (M1), a fifth switch (SW35), which is coupled between the output terminal (OUT_C) of the amplifier (320) and the second input terminal (IN_B) of the amplifier (320), a sixth switch (SW36), which is coupled between the second end (3522) of the second capacitive component (352) and the first end (D) of the second transistor (M2), and a seventh switch (SW37), which is coupled between the reference voltage (VR) and the second end (3522) of the second capacitive component (352);
wherein the offset cancellation and level shifting circuit (350) is configured to sense and store the offset voltage (V_{OS}) and the shifting voltage level (V_{LS}) by utilizing the first capacitor component (351) and the second capacitor component (352), when the first switch (SW31), the third switch (SW33), the fifth switch (SW35) and the seventh switch (SW37) are conductive and the other switches are not conductive, and is further configured to cancel the offset voltage (V_{OS}) and apply the shifting voltage level (V_{LS}) to the first input terminal (IN_A) and the second input terminal (IN_B) of the amplifier (320) by utilizing the first capacitor component (351) and the second capacitor component (352) when the second switch (SW32), the fourth switch (SW34) and the sixth switch (SW36) are conductive and the other switches are not conductive.

6. The driver circuit (300) according to any one of the claims 1 to 5, further comprising:
a level shifting circuit (LS), which is coupled to the amplifier (320) and the current mirror (310), configured to provide a shifting voltage level (V_{LS}) to the first input terminal (IN_A) and the second input terminal (IN_B) of the amplifier (320).

7. The driver circuit (300) according to any one of the claims 1 to 6, further comprising:
a resistive component (311), which is coupled between the output terminal (OUT_C) of the amplifier (320) and the control end (G) of the second transistor (M2), for providing a zero for the driver circuit (300).

8. An error detection circuit (400) for a driver circuit (300) according to any of the claims 1 to 7, having at least the second transistor (M2), wherein a first end (D) of the second transistor (M2) is outputting a driving current, wherein the error detection circuit (400) comprises:
a reference voltage generation circuit (410), comprising:
a third transistor (M3), having a first end (D), a second end (S) and a control end (G), wherein the control end (G) of the third transistor (M3) is coupled to a supply voltage (V_{DD}) of the driver circuit (300);
a reference current source (412), which is coupled to the first end (D) of the third transistor (M3), configured to provide a reference current (I_{REF1}) to the third transistor (M3); and
a comparator (420), having a first input terminal (IN_D), a second input terminal (IN_E) and an output terminal (OUT_F), wherein the first input terminal (IN_D) is coupled to the first end (D) of the second transistor (M2), the second input terminal (IN_E) is coupled to the first end (D) of the third transistor (M3), wherein the comparator (420) is configured to compare a voltage level of the first end (D) of the second transistor (M2) with a voltage level of the first end (D) of the third transistor (M3) to generate an error indicating signal on the output terminal.

9. The error detection circuit according to claim 8, wherein the comparator (420) generates the error indicating signal indicative of an error status of the driver circuit, when the voltage level of the first end of the second transistor (M2) is smaller than the voltage level of the first end of the third transistor (M3).

10. The error detection circuit according to claim 8, wherein an amount of the reference current is K times smaller than that of the driving current and a size of the third transistor (M3) is K times smaller than a size of the first transistor (M2).

11. An error detection method for a driver circuit (300) according to any one of the claims 1 to 7, having at least the second transistor (M2), wherein a first end (D) of the second transistor (M2) is outputting a driving current, wherein the error detection method comprises:
generating a reference voltage by applying a supplying voltage to a gate of a third transistor (M3) and applying a reference current to a first end of the third transistor (M3); and
generating an error indicating signal by comparing a voltage level of the first end of the second transistor (M2) with a voltage level of the first end of the third transistor (M3).

12. The error detection method according to claim 11, wherein the error indicating signal is indicative of an error status of the driver circuit (300) when the voltage level of the first end of the second transistor (M2) is smaller than the voltage level of the first end of the third transistor (M3).

13. The error detection method according to claim 11, wherein an amount of the reference current is K times smaller than that of the driving current and a size of the third transistor (M3) is K times smaller than a size of the second transistor (M2).

## Revendications

1. Circuit de commande (300) pour commander un dispositif électroluminescent (LD), comprenant :
un miroir de courant (310), ayant un premier transistor (M1) et un deuxième transistor (M2), ayant chacun une première extrémité (D), une deuxième extrémité (S) et une extrémité de commande (G), dans lequel le premier transistor (M1) est configuré pour recevoir un courant de référence (I_{REF}) au niveau de la première extrémité (D) du premier transistor (M1), et le deuxième transistor (M2) est configuré pour générer un courant de commande (I_{DRV}) au niveau de la première extrémité (D) du deuxième transistor (M2), et la première extrémité (D) du deuxième transistor (M2) est reliée directement au dispositif électroluminescent (LD) ; et
un amplificateur (320), ayant une première borne d'entrée (IN_A), une deuxième borne d'entrée (IN_B) et une borne de sortie (OUT_C), dans lequel la première borne d'entrée (IN_A) est couplée à la première extrémité (D) du premier transistor (M2), la deuxième borne d'entrée (IN_B) étant couplée à la première extrémité (D) du deuxième transistor (M2), et la borne de sortie (OUT_C) étant couplée aux extrémités de commande (G) des premier et deuxième transistors,
**caractérisé en ce que**
le circuit de commande (3) comprend en outre un circuit de suppression de décalage (OC), qui est couplé à l'amplificateur (320) et au miroir de courant (310), pour supprimer une tension de décalage de l'amplificateur (320).

2. Circuit de commande (300) selon la revendication 1, dans lequel le circuit de suppression de décalage (330) comprend :
un composant capacitif (332), ayant une première extrémité (3321) et une deuxième extrémité (3322), dans lequel la première extrémité (3321) du composant capacitif (332) est couplée à la première borne d'entrée (IN_A) de l'amplificateur (320) ; et
un dispositif de commutation, ayant un premier commutateur (SW11), qui est couplé entre la première extrémité (D) du premier transistor (M1) et la première extrémité (3321) du composant capacitif (332), un deuxième commutateur (SW12), qui est couplé entre la deuxième extrémité (3322) du composant capacitif (332) et la première extrémité (D) du premier transistor (M1), et un troisième commutateur (SW13), qui est couplé entre la deuxième extrémité (3322) du composant capacitif (332) et la première extrémité (D) du deuxième transistor (M2) ;
dans lequel le circuit de suppression de décalage (332) est configuré pour détecter et stocker la tension de décalage (Vos), lorsque le premier commutateur (SW11) et le troisième commutateur (S13) sont conducteurs et le deuxième commutateur (SW12) n'est pas conducteur, et est en outre configuré pour supprimer la tension de décalage (V_{OS}) selon la tension de décalage détectée et stockée, lorsque le deuxième commutateur (SW12) est conducteur et le premier commutateur (SW11) et le troisième commutateur (SW13) ne sont pas conducteurs.

3. Circuit de commande (300) selon la revendication 1, **caractérisé en ce que** :
le circuit de suppression de décalage (OC) est un circuit de suppression de décalage et de déplacement de niveau (340, 350), qui est couplé à l'amplificateur (320) et au miroir de courant (310), pour appliquer un niveau de tension de déplacement (V_{LS}) aux première et deuxième bornes d'entrée (IN_A, IN_B) de l'amplificateur (320) et pour supprimer une tension de décalage (V_{OS}) de l'amplificateur (320).

4. Circuit de commande selon la revendication 3, dans lequel le circuit de suppression de décalage et de déplacement de niveau (340) comprend :
un premier composant capacitif (341), ayant une première extrémité (3411) et une deuxième extrémité (3412), dans lequel la première extrémité (3411) du premier composant capacitif (341) est couplée à la première borne d'entrée (IN_A) de l'amplificateur (320) ;
un deuxième composant capacitif (342), ayant une première extrémité (3421) et une deuxième extrémité (3422), dans lequel la première extrémité (3421) du deuxième composant capacitif (342) est couplée à la deuxième borne d'entrée (IN_B) de l'amplificateur (320) ;
un générateur de tension, couplé à la deuxième borne d'entrée (IN_B) de l'amplificateur (320), pour générer le niveau de tension de déplacement (V_{LS}) ;
et
un dispositif de commutation, comportant un premier commutateur (SW21), qui est couplé entre la deuxième extrémité (3412) du premier composant capacitif (341) et une tension de référence (VR), un deuxième commutateur (SW22), qui est couplé entre la deuxième extrémité (3412) du premier composant capacitif (341) et la première extrémité (D) du premier transistor (M1), un troisième commutateur (SW23), qui est couplé entre la première borne d'entrée (IN_A) de l'amplificateur (320) et la première extrémité (D) du premier transistor (M1), un quatrième commutateur (SW24) qui est couplé entre la deuxième borne d'entrée (IN_B) de l'amplificateur (320) et le générateur de tension, un cinquième commutateur (SW25), qui est couplé entre la deuxième extrémité (3422) du deuxième composant capacitif (342) et la première extrémité (D) du deuxième transistor (M2), et un sixième commutateur (SW26), qui est couplé entre la tension de référence (VR) et la deuxième extrémité (3422) du deuxième composant capacitif (342) ;
dans lequel le circuit de suppression de décalage et de déplacement de niveau 340 est configuré pour détecter et stocker la tension de décalage (V_{OS}) et le niveau de tension de déplacement (V_{LS}) en utilisant le premier composant capacitif (341) et le deuxième composant capacitif (342), lorsque le premier commutateur (SW21), le troisième commutateur (SW23), le quatrième commutateur (SW24) et le sixième commutateur (SW26) sont conducteurs et les autres commutateurs ne sont pas conducteurs, et est en outre configuré pour supprimer la tension de décalage (V_{OS}) et pour appliquer le niveau de tension de déplacement (V_{LS}) à la première borne d'entrée (IN_A) et à la deuxième borne d'entrée (IN_B) de l'amplificateur (320) en utilisant le premier composant capacitif (341) et le deuxième composant capacitif (342), lorsque le deuxième commutateur (SW22) et le cinquième commutateur (SW25) sont conducteurs et les autres commutateurs ne sont pas conducteurs.

5. Circuit de commande (300) selon la revendication 3, dans lequel le circuit de suppression de décalage et de déplacement de niveau (350) comprend :
un premier composant capacitif (351), ayant une première extrémité (3511) et une deuxième extrémité (3512), dans lequel la première extrémité (3511) du premier composant capacitif (351) est couplée à la première borne d'entrée (IN_A) de l'amplificateur (320) ;
un deuxième composant capacitif (352), ayant une première extrémité (3521) et une deuxième extrémité (3522), dans lequel la première extrémité (3521) du deuxième composant capacitif (352) est couplée à la deuxième borne d'entrée (IN_B) de l'amplificateur (320) ;
un générateur de tension, qui est couplé à la deuxième borne d'entrée (IN_B) de l'amplificateur (320), pour générer le niveau de tension de déplacement (V_{LS}) ; et
un dispositif de commutation, ayant un premier commutateur (SW31), qui est couplé entre la deuxième extrémité (3512) du premier composant capacitif (351) et une tension de référence (VR), un deuxième commutateur (SW22), qui est couplé entre la deuxième extrémité (3512) du premier composant capacitif (351) et la première extrémité (D) du premier transistor (M1), un troisième commutateur (SW33), qui est couplé entre la première borne d'entrée (IN_A) de l'amplificateur (320) et le générateur de tension, un quatrième commutateur (SW34), qui est couplé entre la borne de sortie (OUT_C) de l'amplificateur (320) et l'extrémité de commande (G) du premier transistor (M1), un cinquième commutateur (SW35), qui est couplé entre la borne de sortie (OUT_C) de l'amplificateur (320) et la deuxième borne d'entrée (IN_B) de l'amplificateur (320), un sixième commutateur (SW36), qui est couplé entre la deuxième extrémité (3522) du deuxième composant capacitif (352) et la première extrémité (D) du deuxième transistor (M2), et un septième commutateur (SW37), qui est couplé entre la tension de référence (VR) et la deuxième extrémité (3522) du deuxième composant capacitif (352) ;
dans lequel le circuit de suppression de décalage et de déplacement de niveau (350) est configuré pour détecter et stocker la tension de décalage (V_{OS}) et le niveau de tension de déplacement (V_{LS}) en utilisant le premier composant capacitif (351) et le deuxième composant capacitif (352), lorsque le premier commutateur (SW31), le troisième commutateur (SW33), le cinquième commutateur (SW35) et le septième commutateur (SW37) sont conducteurs et les autres commutateurs ne sont pas conducteurs, et est en outre configuré pour supprimer la tension de décalage (V_{OS}) et pour appliquer le niveau de tension de déplacement (V_{LS}) à la première borne d'entrée (IN_A) et à la deuxième borne d'entrée (IN_B) de l'amplificateur (320) en utilisant le premier composant capacitif (351) et le deuxième composant capacitif (352) lorsque le deuxième commutateur (SW32), le quatrième commutateur (SW34) et le sixième commutateur (SW36) sont conducteurs et les autres commutateurs ne sont pas conducteurs.

6. Circuit de commande (300) selon l'une quelconque des revendications 1 à 5, comprenant en outre :
un circuit de déplacement de niveau (LS), qui est couplé à l'amplificateur (320) et au miroir de courant (310), configuré pour fournir un niveau de tension de déplacement (V_{LS}) à la première borne d'entrée (IN_A) et à la deuxième borne d'entrée (IN_B) de l'amplificateur (320).

7. Circuit de commande (300) selon l'une quelconque des revendications 1 à 6, comprenant en outre :
un composant résistif (311) qui est couplé entre la borne de sortie (OUT_C) de l'amplificateur (320) et l'extrémité de commande (G) du deuxième transistor (M2), pour fournir un zéro pour le circuit de commande (300).

8. Circuit de détection d'erreur (400) pour un circuit de commande (300) selon l'une des revendications 1 à 7, ayant au moins le deuxième transistor (M2), dans lequel une première extrémité (D) du deuxième transistor (M2) délivre en sortie un courant de commande, dans lequel le circuit de détection d'erreur (400) comprend :
un circuit de génération de tension de référence (410), comprenant :
un troisième transistor (M3), ayant une première extrémité (D), une deuxième extrémité (S) et une extrémité de commande (G), dans lequel l'extrémité de commande (G) du troisième transistor (M3) est couplée à une tension d'alimentation (V_{DD}) du circuit de commande (300) ;
une source de courant de référence (412), qui est couplée à la première extrémité (D) du troisième transistor (M3), configurée pour fournir un courant de référence (I_{REF1}) au troisième transistor (M3) ; et
un comparateur (420), ayant une première borne d'entrée (IN_D), une deuxième borne d'entrée (IN_E) et une borne de sortie (OUT_F), dans lequel la première borne d'entrée (IN_D) est couplée à la première extrémité (D) du deuxième transistor (M2), la deuxième borne d'entrée (IN_E) est couplée à la première extrémité (D) du troisième transistor (M3), dans lequel le comparateur (420) est configuré pour comparer un niveau de tension de la première extrémité (D) du deuxième transistor (M2) à un niveau de tension de la première extrémité (D) du troisième transistor (M3) pour générer un signal d'indication d'erreur sur la borne de sortie.

9. Circuit de détection d'erreur selon la revendication 8, dans lequel le comparateur (420) génère le signal d'indication d'erreur indiquant un état d'erreur du circuit de commande, lorsque le niveau de tension de la première extrémité du deuxième transistor (M2) est inférieur au niveau de tension de la première extrémité du troisième transistor (M3).

10. Circuit de détection d'erreur selon la revendication 8, dans lequel une quantité du courant de référence est k fois plus petite que celle du courant de commande et une taille du troisième transistor (M3) est k fois plus petite qu'une taille du premier transistor (M2).

11. Procédé de détection d'erreur pour un circuit de commande (300) selon l'une quelconque des revendications 1 à 7, ayant au moins le deuxième transistor (M2), dans lequel une première extrémité (D) du deuxième transistor (M2) délivre en sortie un courant d'attaque, dans lequel le procédé de détection d'erreur comprend le fait :
de générer une tension de référence en appliquant une tension d'alimentation à une grille d'un troisième transistor (M3) et en appliquant un courant de référence à une première extrémité du troisième transistor (M3) ; et
de générer un signal d'indication d'erreur en comparant un niveau de tension de la première extrémité du deuxième transistor (M2) à un niveau de tension de la première extrémité du troisième transistor (M3).

12. Procédé de détection d'erreur selon la revendication 11, dans lequel le signal d'indication d'erreur indique un état d'erreur du circuit de commande (300) lorsque le niveau de tension de la première extrémité du deuxième transistor (M2) est inférieur au niveau de tension de la première extrémité du troisième transistor (M3).

13. Procédé de détection d'erreur selon la revendication 11, dans lequel une quantité du courant de référence est k fois plus petite que celle du courant de commande et une taille du troisième transistor (M3) est k fois plus petite qu'une taille du deuxième transistor (M2).
